(19) **Europäisches Patentamt / European Patent Office / Office européen des brevets**

(11) **EP 4 650 078 A1**

(12) **EUROPEAN PATENT APPLICATION**
published in accordance with Art. 153(4) EPC

(43) Date of publication:
**19.11.2025 Bulletin 2025/47**

(21) Application number: **23922889.3**

(22) Date of filing: **30.11.2023**

(51) International Patent Classification (IPC):
**B21D 22/26** (2006.01)     **B21D 5/01** (2006.01)
**B21D 22/00** (2006.01)     **B21D 22/20** (2006.01)

(52) Cooperative Patent Classification (CPC):
**B21D 5/01; B21D 22/00; B21D 22/20; B21D 22/26**

(86) International application number:
**PCT/JP2023/042940**

(87) International publication number:
**WO 2024/171556 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.02.2023  JP 2023021681**

(71) Applicant: **JFE Steel Corporation
Tokyo 100-0011 (JP)**

(72) Inventor: **TOBITA, Shunsuke
Tokyo 100-0011 (JP)**

(74) Representative: **Grünecker Patent- und
Rechtsanwälte
PartG mbB
Leopoldstraße 4
80802 München (DE)**

(54) **METHOD FOR MANUFACTURING PRESS-FORMED PRODUCT AND DIE DESIGN METHOD**

(57)    Even in a case where a high-tensile strength steel sheet or the like is used, a dimensional accuracy fluctuation in a case where twisting or camber back, wall opening, and a material strength fluctuation thereof occurs is reduced with a simple die structure. A method for manufacturing a press formed article for forming a metal sheet (3) into a target component shape (1) having a bending portion (2) which is bent along a longitudinal direction in a cross section including a top plate portion (1A) and a vertical wall portion (1B) is provided. An angle between the top plate portion (1A) and the vertical wall portion (1B) is referred to as a vertical wall angle. A first step (10A) of press-forming an intermediate component (4) using a die set having a forming surface of a first vertical wall angle smaller than a vertical wall angle of the target component shape (1), and a second step (10B) of press-forming the intermediate component (4) with a die set having a forming surface of a second vertical wall angle equal to or greater than the vertical wall angle of the target component shape (1) are included. The vertical wall angle of the intermediate component (4) after release is set to the first vertical wall angle having an angle smaller than the vertical wall angle of the target component shape (1).

FIG. 2

```
(METAL SHEET) —— 3
        ↓
  ┌─────────────┐
  │ FIRST STEP  │ ~ 10A
  └─────────────┘
        ↓
(INTERMEDIATE COMPONENT) —— 4
        ↓
  ┌─────────────┐
  │ SECOND STEP │ ~ 10B
  └─────────────┘
```

FIG. 6

**Description**

Technical Field

The present invention relates to a method for manufacturing a press formed article, and a method for designing a die set used in the manufacturing. The present invention relates to a technology for manufacturing a component having a target component shape, which has a top plate portion and a vertical wall portion with a cross-sectional shape of a U-shape, an L-shape, a hat shape, or the like, by press working. In addition, the target component shape is a shape having one or two or more bending portions that are bent along a longitudinal direction which is a direction intersecting the cross section.

In the present specification, the target component shape in which the above-described bending portion is bent to be concave or convex toward a vertical wall portion side in a top view is also referred to as a "laterally bent shape". In addition, the target component shape in which the above-described bending portion is bent to be concave or convex toward a top plate portion side is also referred to as a "vertically bent shape".

In a case where the target component shape is a "laterally bent shape" and a cross-sectional shape having a vertical wall portion on both right and left sides in a width direction of a top plate portion, the target component shape is as follows. That is, in a bending portion, in a case where one vertical wall portion side of right and left vertical wall portions is concave in a top view, the other vertical wall portion side is convex in a top view. However, vertical wall angles of the right and left vertical wall portions do not need to be the same.

Here, an angle between the top plate portion and the vertical wall portion in the cross-sectional shape is referred to as a vertical wall angle. In a die set, in a forming surface (die shape), an angle (angle of shoulder portion) between a top plate forming surface for forming a top plate portion and a vertical wall forming surface for forming a vertical wall portion is a vertical wall angle. The vertical wall angle is an angle inside a bend of less than 180 degrees.

Background Art

In recent years, in order to achieve both improvement of collision safety and weight reduction of a body of an automobile, the application of high-tensile strength steel sheets having a tensile strength of 590 MPa or more to vehicle body structural components has been progressing. In addition, in recent years, the application of ultra-high-tensile strength steel sheets having a tensile strength of 980 MPa or more to vehicle body structural components has been progressing. The high-tensile strength steel sheets or the ultra-high-tensile strength steel sheets have a high yield strength or a high tensile strength. Therefore, in a case where the high-tensile strength steel sheets or the ultra-high-tensile strength steel sheets are used as materials for vehicle body structural components, forming defects such as spring back are problems in performing press forming.

As one of press formed articles used for vehicle body structural components, a component having the following shape is exemplified. In the component, a top plate portion and a vertical wall portion are continuous in a cross-sectional direction, and the component has a cross-sectional shape in which a part of the component in a longitudinal direction in a top view is bent in a width direction of the top plate portion. The inventor has found that, in a case where such a component is press formed, a compressive stress is generated on an outer side of the bending (convex side) of the vertical wall portion and a tensile stress is generated on an inner side of the bending (concave side) of the vertical wall portion at a bottom dead center of forming. Then, the inventor has found that spring back including twisting occurs in the component after release due to these stresses. In particular, in a case where an ultra-high-tensile strength steel sheet is applied as a material of the component, there is a problem that the stresses at the bottom dead center of forming are increased and the spring back is increased.

In addition, the inventor has found that, even in a case of a component of which the target component shape is a vertically bent shape, the tensile stress is generated in a top plate portion and the compressive stress is generated in a flange portion at the bottom dead center of forming, and the spring back including camber back occurs in the component after the release due to these stresses. Therefore, the same findings were obtained even for the component of which the target component shape is a vertically bent shape. There are same problems even in the component of which the target component shape is a vertically bent shape.

In addition, in an ultra-high-tensile strength steel sheet, fluctuation in a strength in a case of mass-producing the material also becomes relatively large. That is, in the ultra-high-tensile strength steel sheet, a material strength is likely to fluctuate between coils (between production lots). Therefore, in a case where the ultra-high-tensile strength steel sheet is used, there is also a problem that a dimensional accuracy of the component is likely to fluctuate due to a change in a spring back amount.

A press forming method in the related art may include, for example, technologies described in PTLs 1 to 4.

In a press forming method described in PTL 1, a material sheet is bent along a bent folding line in a longitudinal direction. In a case of the bending, the material sheet is bent back to a desired bending angle after over-bending at an angle greater than the desired bending angle. PTL 1 describes that a twisting factor stress is set to 0 accordingly and twisting is suppressed.

A press forming method described in PTL 2 is a method of forming a component that is bent in a longitudinal direction. In this case, in PTL 2, a portion that undergoes a shrinkage flange deformation is formed such that a line length in a longitudinal direction is shorter than a line length of a target component shape. In addition, in PTL 2, a portion that undergoes an elongation flange deformation is formed such that the line length in the longitudinal direction is longer than the line length of the target component shape. After the forming, in PTL 2, the forming is performed into the target component shape. According to this method, PTL 2 describes that the torsion factor stress is decreased and the torsion is decreased.

A press forming method described in PTL 3 targets a formed article including a top plate portion bent in a longitudinal direction, and two vertical wall portions extending from both ends of the top plate portion along the longitudinal direction toward the inside of the bending. PTL 3 discloses that a curvature of the top plate portion in a previous step and an angle between the top plate portion and the vertical wall portion is changed. Accordingly, PTL 3 describes that a stress generated in a subsequent step is decreased and spring back is suppressed.

In addition, PTL 4 targets a product shape in which a top plate portion and a flange portion are continuous in a width direction via a vertical wall portion, and the top plate portion and the flange portion have a hat-shaped cross section that is bent vertically in a side view along a longitudinal direction. In PTL 4, the forming is performed with a radius of curvature smaller than the product shape in a previous step, and the forming is performed with a radius of curvature greater than the product shape in a subsequent step. Accordingly, PTL 4 describes that the stress generated in the subsequent step is decreased and spring back is suppressed.

Citation List

Patent Literatures

PTL 1: JP 2004-195535 A
PTL 2: JP 5664810 B
PTL 3: JP 2011-206789 A
PTL 4: JP 2019-25533 A

Summary of Invention

Technical problem

A press forming method described in PTL 1 aims to set a torsion factor stress after bending back to 0. However, in a case where a significant material strength fluctuation occurs in an ultra-high-tensile strength steel sheet, a material strength changes, and thus a twisted amount changes. Therefore, there is a possibility that a product may not fall within dimensional tolerance. In addition, in the method described in PTL 1, a die structure is very complicated. Therefore, in a case of forming an ultra-high-tensile strength steel sheet, there is a concern that a die set may have insufficient rigidity. Thus, in a case where the method of PTL 1 is adopted, there is a possibility that the cost of repairing or restoring equipment increases.

Furthermore, in a case of a component having a bending portion on right and left sides in a top view as a target, there is a concern that twisting and a change in an angle of a vertical wall may occur at the same time due to the press forming. However, PTL 1 does not consider a method for obtaining a vertical wall angle of a target product.

In addition, a press forming method described in PTL 2 cannot be applied to a component having no flange portion continuous to one end of a vertical wall portion. In addition, the method of PTL 2 is carried out in one step. Therefore, the method of PTL 2 has a complicated die structure and has poor productivity.

In addition, in a press forming method described in PTL 3, a vertical wall portion is formed to be sagging in the forming of a subsequent step. Therefore, the behavior of a sheet during the forming is unstable. For such a reason, in the method of PTL 3, there is a concern that it is difficult to achieve a stable dimensional accuracy in mass production.

In addition, in a press forming method described in PTL 4, a radius of curvature of each of the top plate portion and the flange portion in a previous step is changed. Therefore, the method cannot be applied to a component having a U-shaped cross section without a flange portion. In addition, even in a case where a component with a cross-sectional hat shape including a flange portion is targeted, a bent shape of a component to be press formed in a previous step and a bent shape of a die set in a subsequent step are different from each other. Therefore, there is a concern that a formed article in the previous step cannot be correctly set in the die set in the subsequent step.

The present invention has been made in view of the above-described points. An object of the present invention is to reduce twisting, camber back, or a change in a vertical wall angle even in a case where a high-tensile strength steel sheet or an ultra-high-tensile strength steel sheet is used, with a simple die structure. In addition, an object thereof is to greatly decrease a dimensional accuracy fluctuation in a case where material strength fluctuation occurs. In addition, an object of the present invention is to provide a press forming method with excellent shape freezing property and material strength sensitivity, that is capable of obtaining a highly accurate component close to a desired component shape (target component shape).

Solution to Problem

In order to solve the problem, according to an aspect of the present invention, there is provided a method for manufacturing a press formed article for forming a metal sheet into a target component shape having a cross section including a top plate portion and a vertical wall portion connected to an end portion of the top plate portion in a width direction and extends in a direction different from the top plate portion, and having one or two or more bending portions which are bent along a longitudinal direction which is a direction intersecting the cross section, the method including: in a case where an angle between the top plate portion and the vertical wall portion of the cross section is defined as a vertical wall angle, a first step of press-forming the metal sheet into an intermediate component including the top plate portion and the vertical wall portion using a die set having a forming surface with a first vertical wall angle smaller than a vertical wall angle of the target component shape at a position of the bending portion; and a second step of press-forming the intermediate component with a die set having a forming surface with a second vertical wall angle equal to or greater than the vertical wall angle of the target component shape at the position of the bending portion, in which, at the position of the bending portion, for a vertical wall angle of the intermediate component after release in the first step, the first vertical wall angle is set to be an angle smaller than the vertical wall angle of the target component shape.

Advantageous Effects of Invention

In the aspect of the present invention, in the first step, the intermediate component having a vertical wall angle smaller than that of a press formed article having the target component shape is manufactured for at least a portion that is the bending portion. Further, in the second step, the intermediate component is press formed with a die set having an angle equal to or greater than the vertical wall angle of the press formed article for the at least a portion that is the bending portion.
Accordingly, according to the aspect of the present invention, for example, in a case of manufacturing the press formed article having the target component shape of a "laterally bent shape", it is possible to reverse and reduce a stress generated in a vertical wall of the bending portion in the second step.
In addition, according to the aspect of the present invention, even in a case of manufacturing the press formed article having the target component shape of a "vertically bent shape", it is possible to reduce spring back in the press forming and improve a dimensional accuracy of the press formed article.
In addition, according to the aspect of the present invention, since the vertical wall angle of the die set is adjusted for the press forming, it is possible to perform the press forming with a simple die structure.
From the above, according to the aspect of the present invention, even in a case where a high-tensile strength steel sheet having a tensile strength of 590 MPa or more or an ultra-high-tensile strength steel sheet having a tensile strength of 980 MPa or more is used as the material, the following effects are exhibited. That is, in the manufacturing of the press formed article having the "laterally bent shape", it is possible to suitably reduce twisting or camber back and a change in the vertical wall angle with respect to the target component shape.
In addition, according to the aspect of the present invention, in a case of manufacturing both the press formed article having a "laterally bent shape" and the press formed article having a "vertically bent shape", even in a case where the material strength is changed, a component having high dimensional accuracy is obtained. Therefore, according to the aspect of the present invention, it is also possible to improve a yield during mass production.

Brief Description of Drawings

FIG. 1 is a view illustrating a shape of a press formed article according to a first embodiment of the present invention. FIG. 1A is a top view, FIG. 1B is a bird's-eye view, and FIG. 1C is a cross-sectional view taken along line X-X of FIG. 1A.
FIG. 2 is a view illustrating a step of pressing according to a first embodiment based on the present invention.
FIG. 3 is a schematic view illustrating pressing by a die set in a first step of a first embodiment.
FIG. 4 is a schematic cross-sectional view illustrating a die set in a first step.
FIG. 5 is a schematic view illustrating pressing by a die set in a second step of a first embodiment. FIG. 5A is a view illustrating a relationship between a punch (lower die), a pad, and an intermediate component during pressing, and FIG. 5B is a view illustrating a relationship between a punch (lower die) and a die (upper die).

FIG. 6 is a schematic cross-sectional view illustrating a relationship between a die set and an intermediate component in a second step.

FIG. 7 is a schematic view illustrating a comparative forming method.

FIG. 8 is a view illustrating a problem of a comparative forming method. FIG. 8A illustrates a manufactured press formed article, and FIG. 8B illustrates a cross-sectional view taken along line A-A' of FIG. 8A.

FIG. 9 is a view illustrating a distribution of a longitudinal direction stress at a press bottom dead center in a comparative forming method. FIG. 9A is a view from a convex side of a vertical wall, and FIG. 9B is a view from a concave side of the vertical wall.

FIG. 10 is a view illustrating a stress-strain relationship by press forming for describing a dimensional accuracy fluctuation in a comparative forming method.

FIG. 11 is a view illustrating an example of a stress distribution after a first step. FIG. 11A is a view from a convex side of a vertical wall, and FIG. 11B is a view from a concave side of the vertical wall.

FIG. 12 is a view illustrating an example of a stress distribution after a second step. FIG. 12A is a view from a convex side of a vertical wall, and FIG. 12B is a view from a concave side of the vertical wall.

FIG. 13 is a view illustrating a stress-strain relationship by press forming for describing a dimensional accuracy fluctuation according to a first embodiment of the present invention.

FIG. 14 is a view illustrating an example of a strain distribution after a first step. FIG. 14A is a view from a convex side of a vertical wall, and FIG. 14B is a view from a concave side of the vertical wall.

FIG. 15 is a view illustrating an example of a strain distribution after a second step. FIG. 15A is a view from a convex side of a vertical wall, and FIG. 15B is a view from a concave side of the vertical wall.

FIG. 16 is a view illustrating a relationship between a twisted amount and ($\theta1/\theta2$).

FIG. 17 is a view illustrating a relationship between a twisted amount and ($\theta1/\theta0$).

FIG. 18 is a view illustrating a relationship between a twisted amount and ($\theta1'/\theta2$).

FIG. 19 is a view illustrating a relationship between a twisted amount and $|\varepsilon2/\varepsilon1|$.

FIG. 20 is a view illustrating a relationship between a twisted amount and $|\varepsilon2'/\varepsilon1'|$.

FIG. 21 is a view illustrating a shape of a press formed article according to a second embodiment based on the present invention. FIG. 21A is a bird's-eye view, FIG. 21B is a side view, and FIG. 21C is a cross-sectional view in a width direction.

FIG. 22 is a schematic view illustrating pressing by a die set in a first step in a second embodiment.

FIG. 23 is a schematic view illustrating pressing by a die set in a second step in a second embodiment. FIG. 23A is a view illustrating a relationship between a punch (lower die), a pad, and an intermediate component during pressing, and FIG. 23B is a view illustrating a relationship between a punch (lower die) and a die (upper die).

FIG. 24 is a side view illustrating generation of camber back.

FIG. 25 is a view illustrating a distribution of a longitudinal direction stress at a press bottom dead center in a comparative forming method.

FIG. 26 is a view illustrating a stress-strain relationship by press forming for describing a dimensional accuracy fluctuation in a comparative forming method.

FIG. 27 is a view illustrating a cross-sectional shape after a first step and a second step in a second embodiment. FIG. 27A illustrates a cross-sectional shape after the first step, and FIG. 27B illustrates a cross-sectional shape after the second step.

FIG. 28 is a view illustrating an example of a stress distribution after a first step.

FIG. 29 is a view illustrating an example of a stress distribution after a second step.

FIG. 30 is a view illustrating a stress-strain relationship by press forming for describing a dimensional accuracy fluctuation according to a second embodiment based on the present invention.

FIG. 31 is a view illustrating an example of a strain distribution after a first step.

FIG. 32 is a view illustrating an example of a strain distribution after a second step.

FIG. 33 is a view illustrating a relationship between a height deviation amount and $\varepsilon t2/\varepsilon t1$.

FIG. 34 is a view illustrating a relationship between a height deviation amount and $\varepsilon b2/\varepsilon b1$.

Description of Embodiments

Hereinafter, examples of a press forming method and the like according to an embodiment of the present invention will be described with reference to the drawings.

[First Embodiment]

(Target Component Shape)

In the present embodiment, a case where a target component shape is a "laterally bent shape" is exemplified.

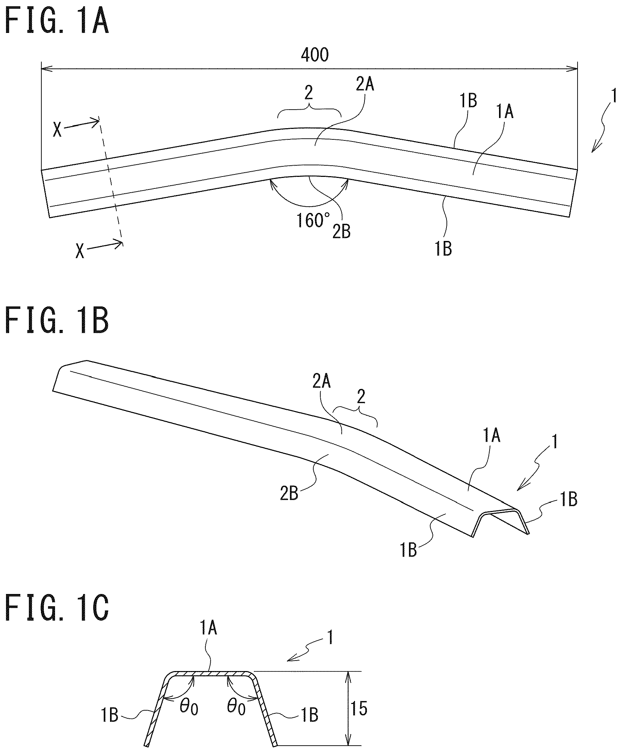

In the present embodiment, a target component shape 1 of a component to be manufactured (press formed article) has a cross section having a top plate portion 1A and vertical wall portions 1B on both right and left sides as illustrated in FIG. 1. The vertical wall portions 1B on both right and left sides are respectively connected to both end portions of the top plate portion 1A in a width direction and extend in a direction different from the top plate portion 1A. That is, in the present embodiment, a case where the shape of the cross-sectional shape is a cross-sectional U-shape is exemplified. However, the present invention can be applied even in a case where the cross section of the target component shape 1 is a cross-sectional hat shape or a cross-sectional L shape. The hat shape is a shape having a flange portion. The L-shape is a shape in which the vertical wall portion 1B is present only in one side of the top plate portion 1A in the width direction.

In addition, the present invention can be applied even when the target component shape has a "laterally bent shape" and a "vertically bent shape".

In FIG. 1, the dimensions (unit is [mm]) used in examples are also shown. However, the present invention is not limited to these dimensions. The same applies to other drawings.

Further, as illustrated in FIGS. 1A and 1B, the target component shape 1 of the present embodiment is exemplified as a shape having a bending portion 2 that is bent toward one vertical wall portion 1B side in a top view along a longitudinal direction. The longitudinal direction is a direction intersecting the above-described cross section. In the target component shape 1 exemplified in the present embodiment, the top plate portion 1A consists of two straight portions having a flat surface in a top view along the longitudinal direction and the bending portion 2 interposed between the two straight portions. Here, reference numeral 2A indicates a top plate portion in the bending portion 2, and reference numeral 2B indicates a vertical wall portion (concave side) in the bending portion 2.

In addition, in the present invention, the target component shape 1 having a plurality of bending portions 2 along the longitudinal direction is also a manufacturing target. In this case, a straight portion may not be present between the adjacent bending portions 2.

As illustrated in FIG. 1, in a case where the vertical wall portions 1B are provided on both right and left sides of the top plate portion 1A, the configuration is as follows. That is, the two vertical wall portions 1B on the right and left sides in one bending portion 2 are convex on the one vertical wall portion 1B side and concave on the other vertical wall portion 1B side in a top view. In the present specification, the vertical wall portion 1B side that is convex is also referred to as an outer side of the bending portion 2 in a top view or a vertical wall convex portion. In addition, the vertical wall portion 1B side that is concave is also referred to as an inner side of the bending portion 2 in a top view or a vertical wall concave portion. However, a vertical wall angle on the one vertical wall portion 1B side and a vertical wall angle on the other vertical wall portion 1B side may be the same angle or may be different from each other.

(Manufacturing Method)

A method for manufacturing a press formed article of the present embodiment is a method for manufacturing a metal sheet 3 (blank material) into the target component shape 1 described above by press forming. The present invention is an invention suitable for a case where a material of the metal sheet 3 is a high-tensile strength steel sheet or an ultra-high-tensile strength steel sheet. The high-tensile strength steel sheet is a steel sheet having a tensile strength of 590 MPa or more. In addition, the present invention can be applied to the metal sheet 3 such as a mild steel sheet or an aluminum sheet.

One of the objects of the present embodiment is to reduce a fluctuation in dimensional accuracy of a component due to spring back caused by twisting and a change in a vertical wall angle and a fluctuation in a strength of a material (difference in strength) in a case of manufacturing a press formed article having the target component shape 1.

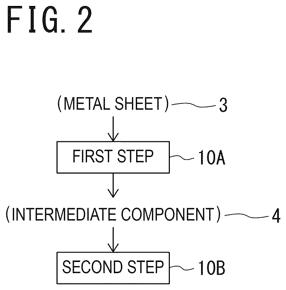

The method for manufacturing the press formed article of the present embodiment includes a first step 10A and a second step 10B as illustrated in FIG. 2.

Here, as described above, an angle between the top plate portion 1A and the vertical wall portion 1B of the cross section is referred to as a vertical wall angle. On a forming surface of a die set, an angle (angle of a shoulder portion) between a top plate forming surface for forming the top plate portion 1A and a vertical wall forming surface for forming the vertical wall portion 1B is the vertical wall angle.

(First Step 10A)

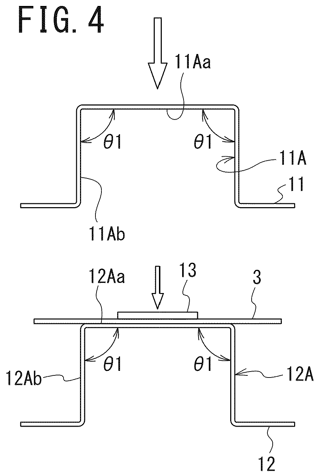

In the first step 10A, as illustrated in FIG. 4 which is a schematic view, a die 11 as an upper die and a die 12 as a lower die are used. The forming surfaces of the die 11 as the upper die and the die 12 as the lower die have a first vertical wall angle $\theta 1$ smaller than a vertical wall angle $\theta 0$ of the target component shape 1. The first step 10A is a step of performing press-forming into an intermediate component 4 having a top plate portion and a vertical wall having a width corresponding to the target component shape 1 using the die set 11 and 12. The intermediate component 4 may have a portion to be cut in a trimming step which is a subsequent step.

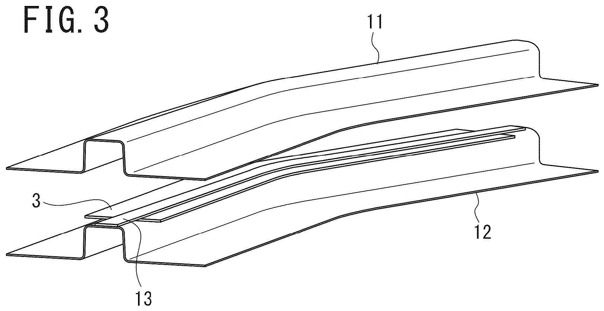

As illustrated in FIGS. 3 and 4, the die set used in the first step 10A includes a die 11 (upper die) and a punch 12 (lower die). Forming surfaces 11A and 12A of the die 11 and the punch 12 used in the first step 10A have forming surfaces in which at least the vertical wall angle is different from that of the desired target component shape 1. In addition, the die set used in the first step 10A includes a pad 13. The pad 13 is a constituent component of a die set that presses a portion of the metal sheet 3 which is the top plate portion 1A against a top plate forming surface 12Aa of the punch 12. Reference numerals 12Aa and 11Aa indicate top plate forming surfaces, and reference numerals 12Ab and 11Ab indicate vertical wall forming surfaces.

That is, in the first step 10A, as illustrated in FIGS. 3 and 4, the pressing is performed by the die 11 and the punch 12 in a state where the metal sheet 3 is pressed by the top plate forming surface 12Aa of the punch 12 and the pad 13.

However, as described above, the first vertical wall angle $\theta1$ on the forming surfaces 11A and 12A of the die set 11 and 12 used in the first step 10A is set to an angle smaller than the vertical wall angle $\theta0$ of the target component shape 1.

In addition, the first vertical wall angle $\theta1$ is set according to a vertical wall angle $\theta1'$ of the intermediate component 4. The vertical wall angle $\theta1'$ is a vertical wall angle of the intermediate component 4 which is manufactured by press-forming the metal sheet 3 in the first step 10A and then released. That is, the first vertical wall angle $\theta1$ is set to be smaller than the vertical wall angle $\theta0$ of the target component shape 1. Then, the intermediate component 4 has a shape after the release, that is, a shape of the intermediate component 4 after spring back.

The first vertical wall angle $\theta1$ may be evaluated and set by, for example, CAE analysis or actual pressing.

The first vertical wall angle $\theta1$ is set individually for each vertical wall angle on the right and left vertical wall portion 1B side as described above.

One vertical wall portion 1B side of the vertical wall angles on the right and left vertical wall portion sides may be set to the first vertical wall angle $\theta1$ as described above. In this case, the vertical wall angle on the other vertical wall portion 1B side may be set to an angle equal to the vertical wall angle $\theta0$ of the target component shape 1. Even in a case where the first vertical wall angle is set only on the one vertical wall portion 1B side based on the present disclosure, an effect is exhibited. However, it is preferable that the first vertical wall angle $\theta1$ is set as described above for both the vertical wall angles on the right and left vertical wall portion 1B sides.

(Second Step 10B)

The second step 10B is a step of press-forming the intermediate component 4 manufactured in the first step 10A to manufacture a press formed article consisting of the target component shape 1.

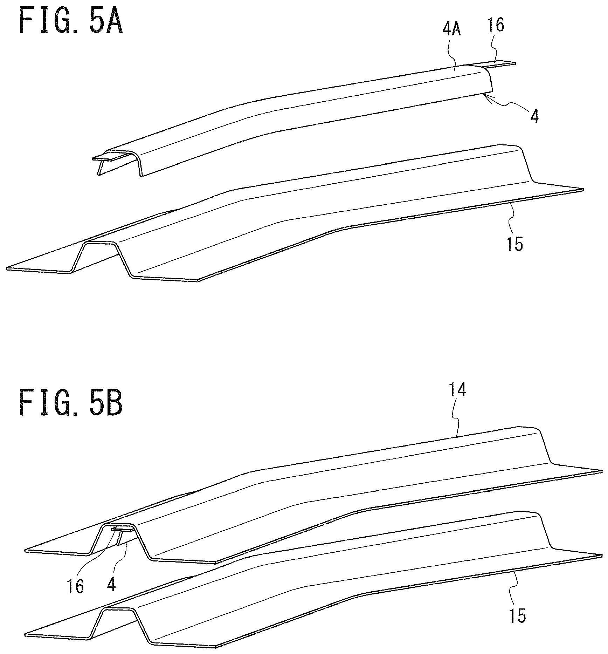

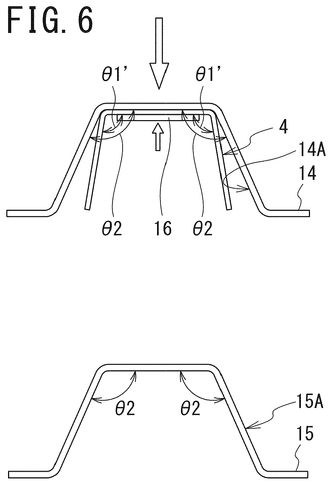

A forming surface of a die set used in the second step 10B has a second vertical wall angle $\theta2$ which is an angle equal to or greater than the vertical wall angle $\theta0$ of the target component shape 1. In addition, forming surfaces of die set 14 and 15 used in the second step 10B have forming surfaces 14A and 15A which follow the desired target component shape 1 except for the vertical wall angle, as illustrated in FIG. 5 and FIG. 6 which is a schematic view. The die set 14 and 15 is a die 14 as an upper die and a punch 15 as a lower die.

It is preferable that the second vertical wall angle $\theta2$ is greater than the vertical wall angle $\theta0$ of the target component shape 1. That is, in the second step 10B, bending back processing of the vertical wall portion 1B is performed. Therefore, it is preferable to design a forming surface shape of the die set in the second step 10B such that the second vertical wall angle $\theta2$ is greater than the vertical wall angle $\theta0$ of the target component shape 1.

In addition, the die set used in the second step 10B includes a pad 16 which presses the top plate portion of the intermediate component 4.

Here, the second vertical wall angle $\theta2$ is set to an angle equal to or greater than the vertical wall angle $\theta0$. Therefore, the second vertical wall angle $\theta2$ is greater than the vertical wall angle $\theta1'$ of the intermediate component 4. Therefore, there is a problem in adopting the following forming method in the forming in the second step 10B. That is, a case where the pad 16 is extended from the die 14 side to perform forming by sandwiching the top plate portion of the intermediate component 4 between the pad 16 and the punch 15 is considered. In this case, there is a problem in that, in a case where the intermediate component 4 is set on the punch 16, the intermediate component 4 is likely to be formed in an unstable state without being placed at a predetermined position of the punch 16.

Therefore, in the second step 10B of the present embodiment, the intermediate component 4 is set on the pad 16 in a state where the pad 16 is extended from a top plate forming surface of the punch 15 before forming. After that, the pad 16 is used to press the top plate portion of the intermediate component 4 against the top plate forming surface of the die 14 (see FIG. 6A). In that state, the intermediate component 4 is press formed by the pad 16 and the die 14. The above operation is configured as the second step 10B of the present embodiment.

(Mutual Relationship between Vertical Wall Angles)

Here, it is disclosed that the vertical wall angle of the target component shape 1 is $\theta0$. It is disclosed that the first vertical wall angle on the forming surfaces 11A and 12A of the die set 11 and 12 in the first step 10A is θ1. It is disclosed that the vertical wall angle of the intermediate component 4 is θ1'. The angle of the intermediate component 4 after being formed in the first step 10A, released, and spring back is the first vertical wall angle θ1'. It is disclosed that the second vertical wall angle on the forming surfaces 14A and 15A of the die set 14 and 15 in the second step 10B is θ2. In the present embodiment, the vertical wall portion 1B is present on the right and left sides, but it is preferable that the following conditions are satisfied individually for the right and left sides.

It is preferable that the first vertical wall angle θ1 and the second vertical wall angle θ2 are set to satisfy Expression (1). That is, it is preferable that the second vertical wall angle θ2 of the die set in the second step 10B is set to be greater than the vertical wall angle θ0 of the target component shape 1.

$$\theta1 < \theta1' < \theta0 < \theta2 \ ...(1)$$

The second vertical wall angle θ2 is preferably less than 1.05 times the vertical wall angle θ0.

Next, suitable conditions for setting the first vertical wall angle θ1 and the second vertical wall angle θ2 will be described.

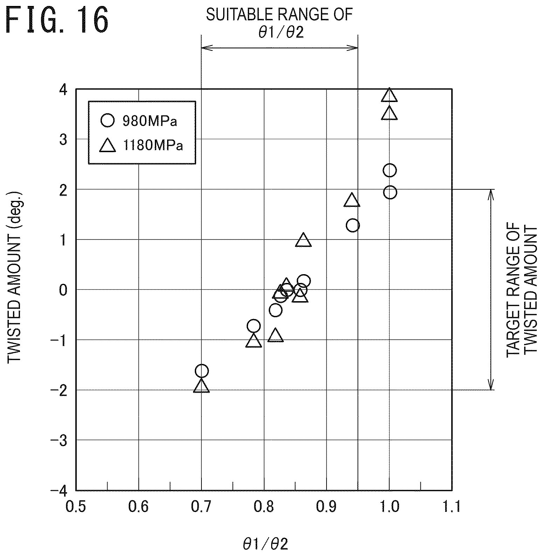

FIG. 16 is a result of investigation of a relationship between (θ1/θ2) and a twisted amount after press-forming, with respect to the press-forming of the press formed article illustrated in FIG. 1. Here, "○" is a result in a case where a steel sheet having a tensile strength of about 980 MPa is used. "Δ" is a result in a case where a steel sheet having a tensile strength of about 1180 MPa is used.

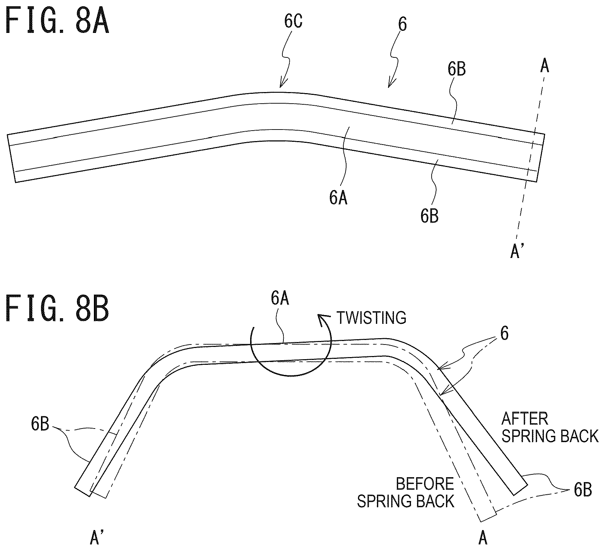

A twisted amount of a vertical axis in FIG. 16 is a value representing a difference between the target component shape 1 and a shape after die set release in terms of an angle, as illustrated in FIG. 8. Specifically, the angle adjustment is performed such that an inclination of the top plate portion of the target component shape 1 and an inclination of the top plate portion of the shape after die set release match each other at a longitudinal center position. Then, the inclination angle of the top plate portion in the cross section of a longitudinal end portion taken along line A-A' illustrated in FIG. 8A was defined as the twisted amount.

In the present embodiment, a target range of the twisted amount to obtain a favorable shape is set to be within ± 2°. In this case, it is found from FIG. 16 that it is preferable that the relationship between the first vertical wall angle θ1 and the second vertical wall angle θ2 is set to satisfy Expression (2).

$$0.7 \leq (\theta1/\theta2) \ ...(2)$$

Here, in a case where (θ1/θ2) is less than 0.7, there is a concern that the bending-back may be excessively performed in a second step (second step 10B). In a case where the bending-back is excessively performed, there is a possibility that the spring back amount (opening and twisting) and the dimensional accuracy fluctuation due to the material strength fluctuation are increased. In addition, in order to obtain a more effective effect, (θ1/θ2) is preferably equal to or greater than 0.75 and less than 0.95.

Next, suitable conditions for setting the first vertical wall angle θ1 and the vertical wall angle θ0 in the target component shape 1 will be described.

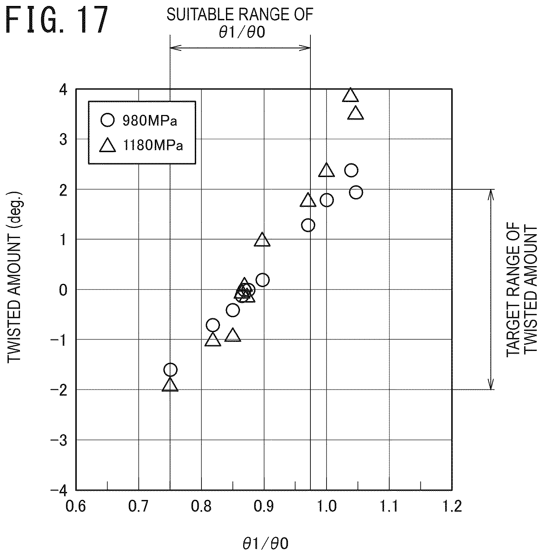

FIG. 17 is a result of investigation of a relationship between (θ1/θ0) and a twisted amount after press-forming, with respect to the press-forming of the press formed article illustrated in FIG. 1.

In the present embodiment, a target range of the twisted amount to obtain a favorable shape is set to be within ± 2°. In this case, it is found from FIG. 17 that it is preferable that the first vertical wall angle θ1 is set to be a value satisfying Expression (3).

$$0.75 \leq (\theta1/\theta0) \ ...(3)$$

Here, in a case where (θ1/θ0) is less than 0.75, θ1 is excessively smaller than θ0, and accordingly, there is a concern that the bending-back may be excessively performed in a second step (second step 10B). In a case where the bending-back is excessively performed, there is a possibility that the spring back amount (opening and twisting) and the dimensional accuracy fluctuation due to the material strength fluctuation are increased.

In the present invention, since θ1 < θ0, θ1/θ0 is less than 1. In addition, in order to obtain a more effective effect, (θ1/θ0) is preferably equal to or greater than 0.8 and less than 0.97.

Next, suitable conditions for setting the first vertical wall angle θ1' and the second vertical wall angle θ2 at the time of release and spring back in the first step will be described.

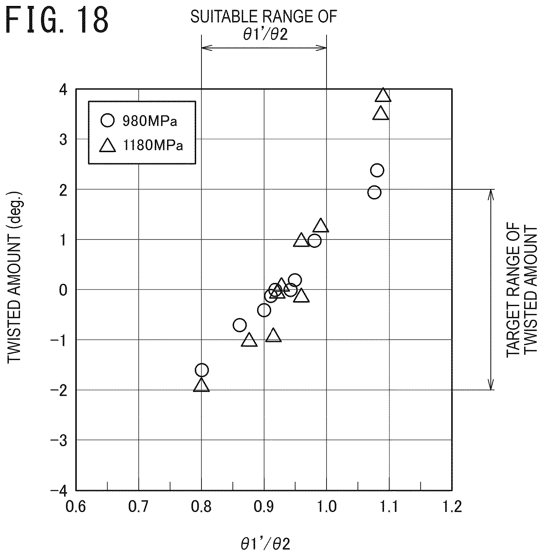

FIG. 18 is a result of investigation of a relationship between (θ1'/θ2) and a twisted amount after press-forming, with respect to the press-forming of the press formed article illustrated in FIG. 1.

In the present embodiment, a target range of the twisted amount to obtain a favorable shape is set to be within ± 2°. In this case, it is found from FIG. 18 that it is preferable that the second vertical wall angle $\theta 2$ is set to be a value satisfying Expression (4).

$$0.8 \leq (\theta 1'/\theta 2) \ ...(4)$$

In a case where $(\theta 1'/\theta 2)$ is less than 0.8, $\theta 1'$ is excessively smaller than $\theta 2$. Therefore, there is a concern that the bending-back may be excessively performed in the second step (second step 10B). In a case where the bending-back is excessively performed, there is a possibility that the spring back amount (opening and twisting) and the dimensional accuracy fluctuation due to the material strength fluctuation are increased.

In the present invention, since $\theta 1' < \theta 2$, $\theta 1'/\theta 2$ is less than 1. In addition, in order to obtain a more effective effect, $(\theta 1'/\theta 2)$ is preferably equal to or greater than 0.85 and less than 0.99.

Next, it is preferable that the second vertical wall angle $\theta 2$ is set to be a value satisfying Expression (5).

$$1.0 < (\theta 2/\theta 0) < 1.05 \ ...(5)$$

In a case where $(\theta 2/\theta 0)$ exceeds 1.05, there is a high possibility that the vertical wall angle $\theta 0$ of the desired target component shape 1 cannot be obtained after the spring back in the second step (second step 10B).

Here, each of the above-described appropriate range (value) may change depending on the component shape or the material strength. Therefore, it is preferable that the conditions of each vertical wall angle described above are examined for each component.

In addition, regarding the conditions of Expressions (1) to (5) described above, the ranges of the respective vertical wall angles $\theta 1$ and $\theta 2$ may be set so as to satisfy the conditions of one or two or more expressions selected from Expressions (1) to (5). These expressions are mainly set based on each of the studies of examples and the like carried out by the inventors.

(Operation and Others)

<Comparative Forming Method>

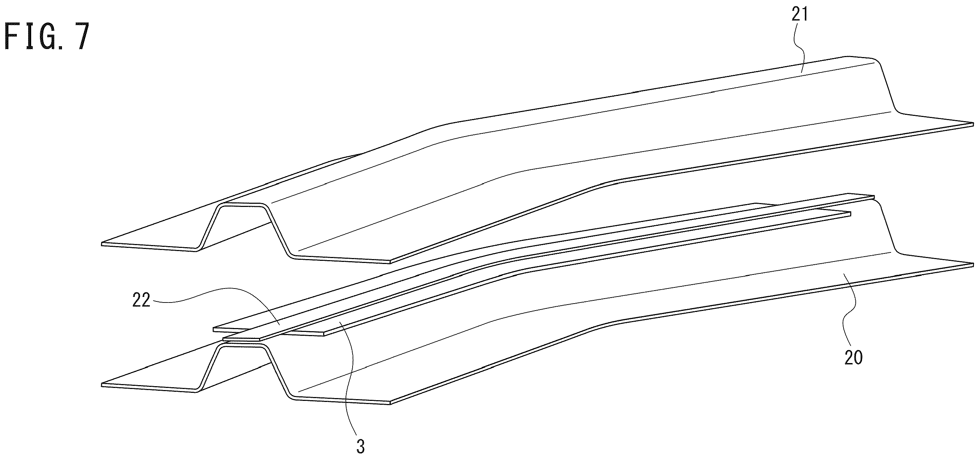

Here, as a comparative forming method, a method as illustrated in FIG. 7 is considered. That is, the entire surface of the metal sheet 3 serving as the top plate portion 1A is sandwiched between the punch 20 and the pad 22. In that state, the metal sheet 3 is press formed with the punch 20 (lower die) and the die 21 (upper die). In the comparative forming method, the forming surfaces (die shape) of the punch 20 and the die 21 are set to the shape following the target component shape 1. The comparative forming method is a press forming method to which typical pad-attached stamping is applied. In this case, the position adjustment is performed such that the target component shape 1 and a shape after die set release match the inclination of the top plate of the longitudinal center cross section.

FIG. 8B illustrates a cross-sectional shape 6 of a component after pressing by the comparative forming method. Reference numeral 6C indicates a bending portion. This cross-sectional shape (see FIG. 8B) is a shape of a cross section taken along line A-A' at a longitudinal end portion in a top view illustrated in FIG. 8A. In the comparative forming method, as illustrated in FIG. 8B, the inclination has occurred in the top plate portion 6A before and after spring back (before and after release). That is, in a case where the comparative forming method is used, it is found that the component is twisted due to spring back. In addition, it is found that the vertical wall angle in the cross section of the formed component is also greater than the vertical wall angle of the die set due to the spring back.

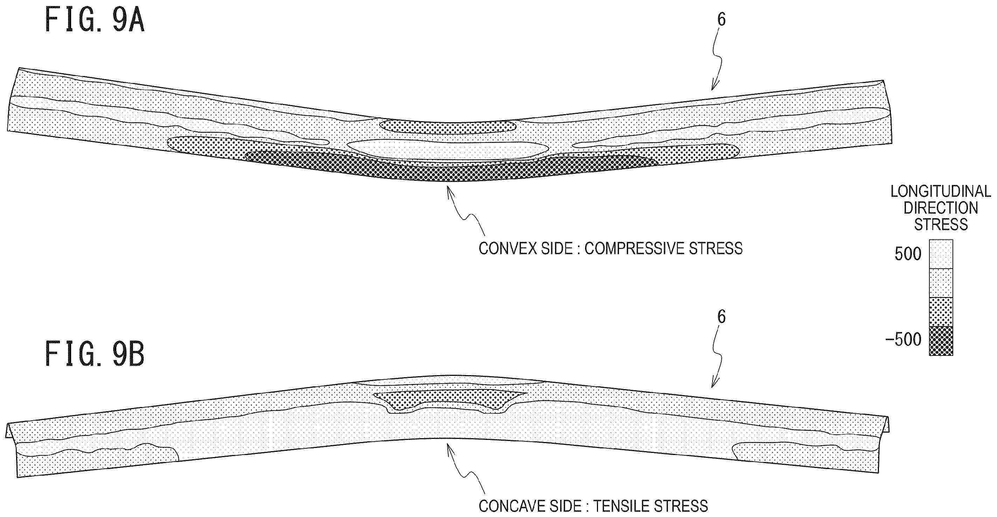

FIG. 9 illustrates a stress distribution in the longitudinal direction at the center of a plate thickness at the press bottom dead center in the comparative forming method.

As found from FIG. 9A, a compressive stress is generated over a wide range on the vertical wall portion 1B side on the convex side in a top view. In addition, as found from FIG. 9B, the tensile stress is generated over a wide range in the vertical wall portion 1B on the concave side in a top view. From this state, it is considered that the twisting of the component cross section after the release is generated by the release of these stresses during the release of the die set. As the material strength increases, a residual stress increases, and the spring back amount increases. In addition, in a case where the material strength increases, the material strength fluctuation during mass production of the material also relatively increases. Therefore, in a case where the material strength increases, the material strength relatively greatly fluctuates between coils used as the material. As a result, a problem of the fluctuation in dimensional accuracy caused by the change in the spring back amount also occurs.

The dimensional accuracy fluctuation will be described with reference to a schematic view of a stress-strain relationship.

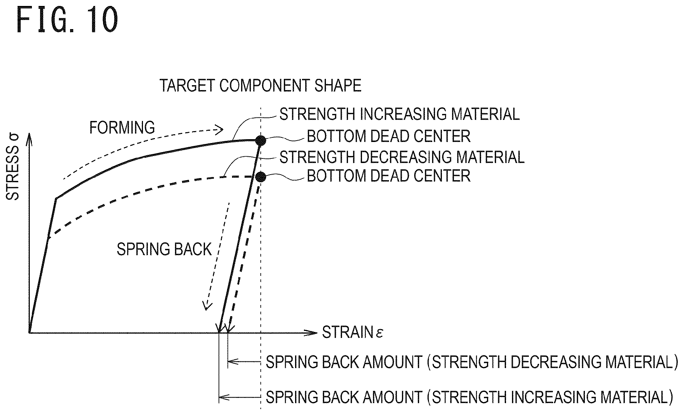

FIG. 10 illustrates a relationship between a stress and a strain of a concave-side vertical wall in a top view during forming by the comparative forming method. FIG. 10 illustrates schematic views of two metal sheets 3 of a strength increasing material and a strength decreasing material assuming the fluctuation in material strength. In the comparative forming method, in a case where the target component shape 1 is formed by pressing, the material on the concave side in a top view is extended in the bending portion 2. Therefore, the tensile stress is generated.

In addition, as illustrated in FIG. 10, there is a difference in a stress value at the bottom dead center of forming between the strength increasing material and the strength decreasing material of the material. In a case where the die set 20 and 21 are released from this state, the spring back occurs, and as a result, twisting occurs in the pressed component. In addition, since the spring back amount varies between the strength increasing material and the strength decreasing material, the dimensional accuracy fluctuation occurs. As the material strength increases, the dimensional accuracy fluctuation increases, and it is beyond the dimensional tolerance of the product. This is an important issue during press forming.

In addition, the change in the vertical wall angle due to the spring back mainly occurs due to a stress difference between front and back plates of the punch shoulder. The spring back amount increases with an increase in material strength. In addition, the change in the vertical wall angle due to the spring back also causes a problem of the dimensional accuracy fluctuation.

<Forming Method of Present Embodiment>

Meanwhile, in the present embodiment, a die shape in the first step 10A and a die shape in the second step 10B are designed as described above. As a result, a factor stress of the twisting is reversed in the second step 10B. As a result, in the present embodiment, both the twisted amount and the dimensional accuracy fluctuation of the twisting are reduced.

In addition, the factor stress of the change in the vertical wall angle is also suppressed by the following phenomenon. That is, by being bent back in the second step 10B, the stress of the punch shoulder is reversed, or a stress in the opposite direction is applied to a periphery of the punch shoulder. As a result, it is possible to reduce both the change in the vertical wall angle and the dimensional accuracy fluctuation.

Here, for example, draw forming or stamping may be applied in the first step 10A. In the second step 10B, the forming may be performed into the target component shape 1.

In the present embodiment, as described above, in the second step 10B, the pressing is performed in a state in which the intermediate component 4 is pressed against the die 14 side by the pad 16. Accordingly, the stabilization of the pressing in the second step 10B is achieved. That is, as illustrated in FIGS. 5 and 6, in the second step 10B, the intermediate component 4 is set on the pad 16 in a state where the pad 16 is extended from the top plate forming surface of the punch 15 before forming. After that, the forming is performed in a state where the top plate portion of the intermediate component 4 is sandwiched between the die 14 and the pad 16. As a result, the stable forming is possible.

Here, in the second step 10B, a case where the pad 16 is extended from the die 14 side to perform forming by sandwiching the intermediate component 4 between the pad 16 and the punch 15 is considered as in the typical forming (comparative forming method). In this case, in a case where the intermediate component 4 is set in the lower die (pad 16), the vertical wall angle $\theta1'$ of the intermediate component 4 is smaller than the vertical wall angle $\theta2$ of the die set. Therefore, the intermediate component 4 is formed in an unstable state in which the intermediate component 4 is propped and is in contact with the punch 15 only partially. As a result, misalignment or the like occurs in the component, and a target shape cannot be obtained.

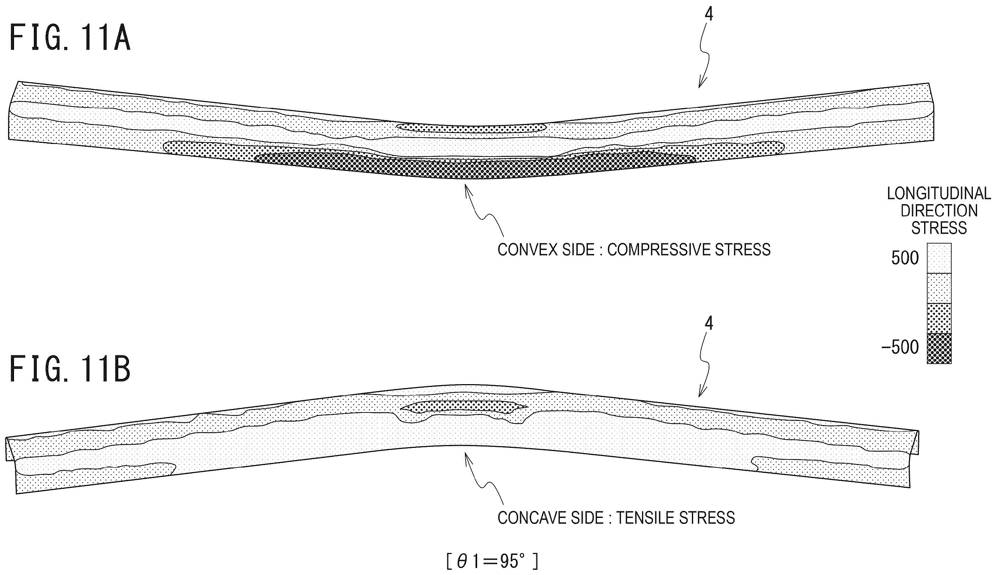

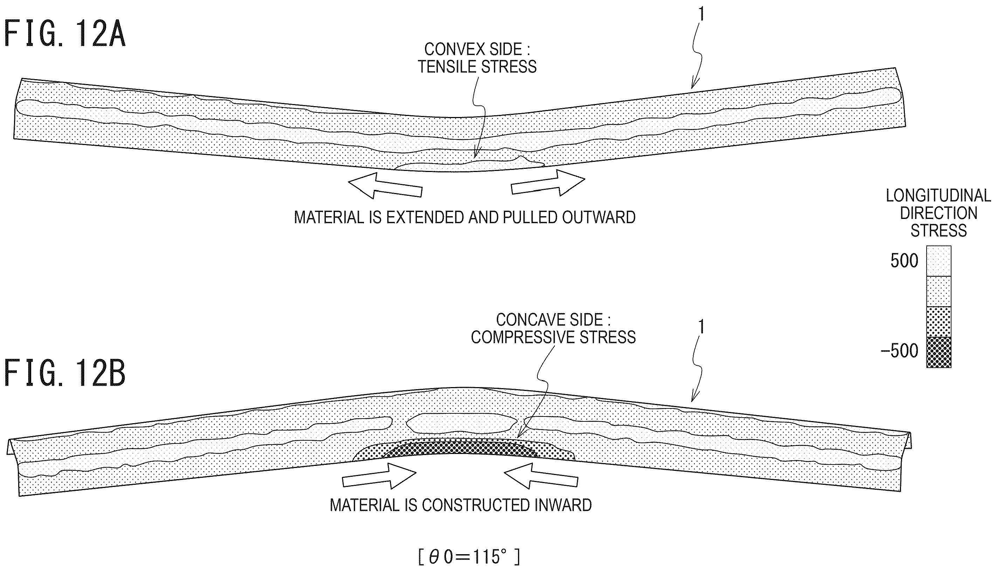

FIGS. 11 and 12 illustrate an example of stress distributions at the center of the plate thickness in the longitudinal direction at the bottom dead center of forming in a case where the press formed article is formed by the method of the present embodiment. This is a case performed under the same conditions as in the comparative forming method except that the forming is performed in two steps and the vertical wall angle is adjusted.

As illustrated in FIG. 11, at the bottom dead center of forming in the first step 10A, the compressive stress is generated over a wide range on the vertical wall portion 1B side on the convex side in a top view. In addition, the tensile stress is generated over a wide range on the vertical wall portion 1B side on the concave side in a top view.

Meanwhile, as illustrated in FIG. 12, at the bottom dead center of forming in the second step 10B, the tensile stress is generated in the vertical wall portion 1B on the convex side 2A in a top view. In addition, the compressive stress is generated in the vertical wall portion 1B on the concave side 2B in a top view. As described above, in the present embodiment, it is found that the stress is reversed as compared with the typical method (typical forming), and a value of the stress and a region where the stress is generated are further reduced.

In the present embodiment, the vertical wall portion 1B is formed to be widened in the second step 10B. As a result, the vertical wall portion 1B on the convex side 2A in a top view is formed in a direction in which a line length increases, and thus the tensile stress is applied. On the other hand, since the vertical wall portion 1B on the concave side 2B in a top view is formed in a direction in which the line length decreases, the compressive stress is applied.

The dimensional accuracy fluctuation due to the material strength fluctuation in a case of forming by the method of the present embodiment will be described with reference to a schematic view of the stress-strain relationship.

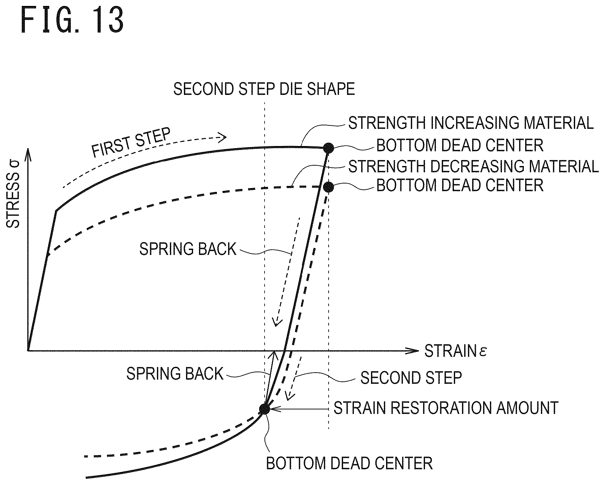

FIG. 13 is a view illustrating a relationship between a stress and a strain of a concave-side vertical wall in a top view in the present embodiment. Here, FIG. 13 illustrates a schematic view of a strength increasing material and a strength decreasing material assuming the fluctuation in material strength.

In the present embodiment, in a case where the intermediate component 4 having a vertical wall angle smaller than the target component shape 1 is formed in the first step 10A, the strain and the tensile stress greater than those in the typical method are applied.

Then, in a case where the forming is performed at the vertical wall angle of the target component shape 1 in the second step 10B, the material on the concave side in a top view is formed in a direction in which the material contracts. Therefore, the tensile stress is reversed to the compressive stress. Here, a point where curves of the history of the strength increasing material and the strength decreasing material of the material (respective stress-strain curve) intersect each other in a low-stress region appears when the stress is reversed. The intersection point is a position of the bottom dead center in the second step in FIG. 13. The vertical wall angle of the first step 10A is decreased for the forming in order to achieve this. As a result, a stress and a stress difference at the bottom dead center of forming of the strength increasing material and the strength decreasing material of the material are decreased. As a result, both twisting and a dimensional accuracy fluctuation of the twisting are decreased. A position where the stress is zero indicates a state after the release.

The change of the vertical wall angle in the first step 10A can be applied only to the bending convex side or only to the concave side in a top view. Therefore, the change of the vertical wall angle can be applied even in a case where the flange portion is provided on either one or both sides of the bending portion 2.

In the second step 10B, a vertical wall portion of the intermediate component 4 formed in the first step 10A is formed to be bent back. That is, the stress in a direction opposite to that in the first step 10A is applied. That is, the stress of the punch shoulder in the cross-sectional direction is reversed, or the stress in the opposite direction is applied to the periphery of the punch shoulder. Therefore, the change of the vertical wall angle and the dimensional accuracy fluctuation thereof are decreased. In this case, a case where the forming is performed under the condition of decreasing the twisted amount and the dimensional accuracy fluctuation of the twisting is considered. In this case, the stress of the punch shoulder or the stress in the periphery of the punch shoulder is excessively reversed. Therefore, in this case, the spring back occurs in a direction of becoming smaller than the vertical wall angle of the die set in the second step 10B.

For this reason, the setting of the first vertical wall angle $\theta 1$ and the second vertical wall angle $\theta 2$ is executed such that the vertical wall angle after spring back in the second step 10B is the vertical wall angle $\theta 0$ in the target component shape 1. For example, the die set may be designed such that the respective vertical wall angles in the first step 10A and the second step 10B satisfy Expressions (1) to (5). The respective vertical wall angles of the die set in the first step 10A and the second step 10B are the first vertical wall angle $\theta 1$ and the second vertical wall angle $\theta 2$.

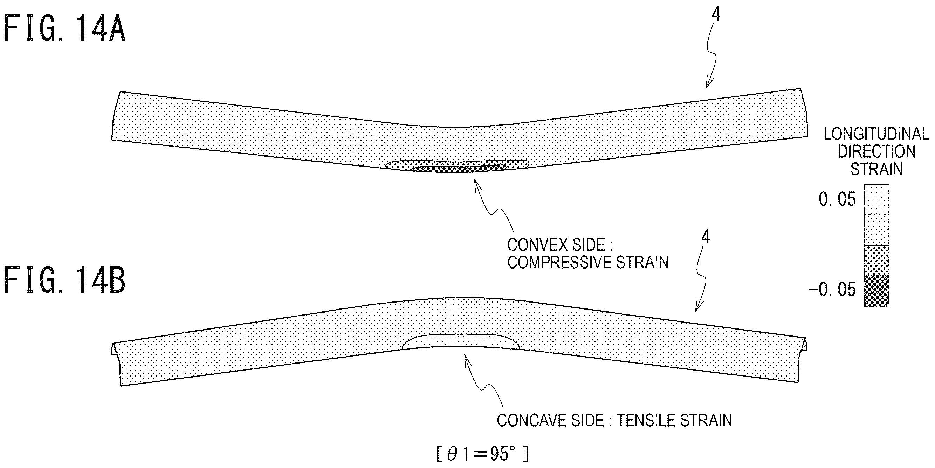

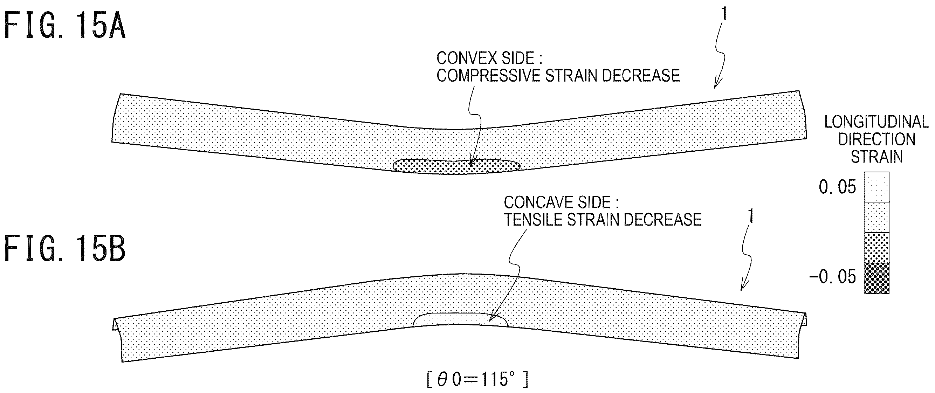

Here, FIGS. 14 and 15 illustrate a distribution of a longitudinal strain in a center portion of the plate thickness at the bottom dead center of forming in a case where the component is formed by the forming method of the present embodiment.

As illustrated in FIG. 14, after the first step 10A, a large compressive strain is generated on the convex side of the vertical wall, and a large tensile strain is generated on the concave side of the vertical wall. Meanwhile, after the second step 10B, as illustrated in FIG. 15, the compressive strain on the convex side is decreased, and the tensile strain on the concave side is also decreased.

From the above, it is found that it is preferable that the vertical wall angles $\theta 1$ and $\theta 2$ in the die set in the first step 10A and the second step 10B are set so as to have the behavior of the strain as illustrated in FIG. 13. It is preferable that the second vertical wall angle $\theta 2$ is set such that the stress applied at the press bottom dead center in the second step 10B matches or approximates in the range of the strength of the material to be used.

From such a thought, it is preferable to set the vertical wall angles $\theta 1$ and $\theta 2$ as follows.

[Convex Side 2A in Top View]

For the distribution of the strain in the longitudinal direction at the press bottom dead center in the press forming of the second step 10B, an average value of strains in a lower half of the vertical wall of the vertical wall portion 1B that is convex in a top view is defined as $\varepsilon 2$. This is defined at least at a position of the bending portion 2.

In addition, for the distribution of the strain in the longitudinal direction at the press bottom dead center in the press forming of the first step 10A, an average value of strains in a lower half of the vertical wall of the vertical wall portion 1B that is convex in a top view is defined as $\varepsilon 1$. This is defined at least at a position of the bending portion 2.

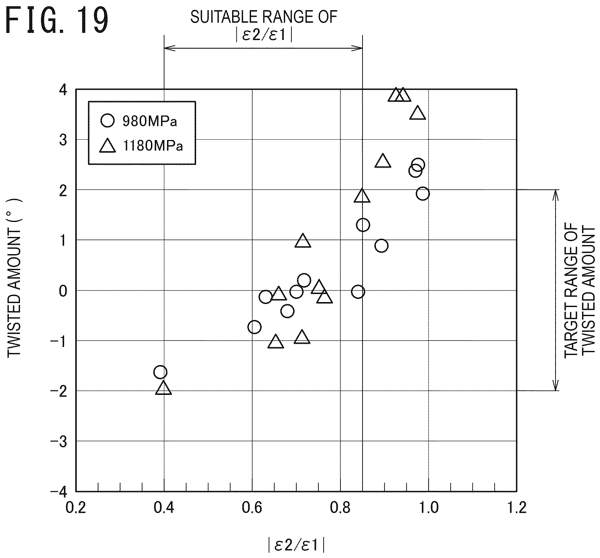

FIG. 19 is a result of investigation of a relationship between $|\varepsilon 2/\varepsilon 1|$ and a twisted amount after press-forming, with respect to the press-forming of the press formed article illustrated in FIG. 1.

In the present embodiment, a target range of the twisted amount to obtain a favorable shape is set to be within $\pm 2°$. In this case, it is found from FIG. 19 that $|\varepsilon 2/\varepsilon 1|$ is preferably in a range of 0.4 to 0.85.

Therefore, it is preferable to set the first vertical wall angle $\theta 1$ and the second vertical wall angle $\theta 2$ to values satisfying Expression (6).

$$0.4 \times |\varepsilon1| \leq |\varepsilon2| < 0.85 \times |\varepsilon1| \ ...(6)$$

Here, $\varepsilon2$ is the average value at the press bottom dead center of the second step 10B when the strain in the longitudinal direction before the first step 10A (before forming) is set as a reference value 0. That is, $\varepsilon2$ is a total of the strain in the longitudinal direction applied by the first step 10A and the strain in the longitudinal direction applied by the second step 10B.

In a case where $|\varepsilon2|$ is smaller than $0.4 \times |\varepsilon1|$, there is a concern that a restoration amount of the strain illustrated in FIG. 13 excessively increases. In this case, there is a possibility that a difference in the spring back amount due to a difference in the strength of the materials cannot be absorbed to a desired value or less. Therefore, $|\varepsilon2|$ is preferably equal to or greater than $0.4 \times |\varepsilon1|$ and more preferably equal to or greater than $0.6 \times |\varepsilon1|$.

Meanwhile, in a case where $|\varepsilon2|$ is greater than $0.85 \times |\varepsilon1|$, there is a concern that the restoration amount of strain after the second step 10B is insufficient. In this case, there is a possibility that a difference in the spring back amount due to a difference in the strength of the materials cannot be reduced to a desired value or less. Therefore, $|\varepsilon2|$ is preferably less than $0.85 \times |\varepsilon1|$ and more preferably equal to or less than $0.8 \times |\varepsilon1|$.

[Concave Side 2B in Top View]

For the distribution of the strain in the longitudinal direction at the press bottom dead center in the press forming of the second step 10B, an average value of strains in a lower half of the vertical wall of the vertical wall portion 1B that is concave in a top view is defined as $\varepsilon2$. This is defined at least at a position of the bending portion 2.

In addition, for the distribution of the strain in the longitudinal direction at the press bottom dead center in the press forming of the first step 10A, an average value of strains in a lower half of the vertical wall of the vertical wall portion 1B that is concave in a top view is defined as $\varepsilon1$. This is defined at least at a position of the bending portion 2.

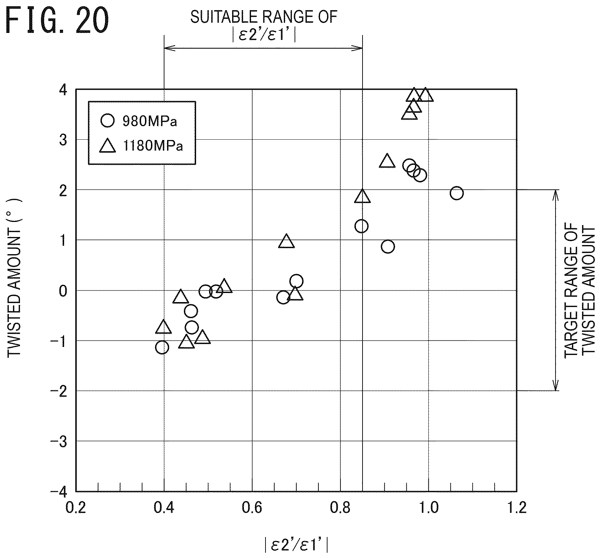

FIG. 20 is a result of investigation of a relationship between $|\varepsilon2'/\varepsilon1'|$ and a twisted amount after press-forming, with respect to the press-forming of the press formed article illustrated in FIG. 1. As the shape and the dimension of the press formed article, a component having the dimensions illustrated in FIG. 1 is assumed. The unit of the dimensions is [mm].

In the present embodiment, a target range of the twisted amount to obtain a favorable shape is set to be within $\pm$ 2°. In this case, it is found from FIG. 20 that $|\varepsilon2'/\varepsilon1'|$ is preferably in a range of 0.4 to 0.85.

Therefore, it is preferable to set the first vertical wall angle $\theta1$ and the second vertical wall angle $\theta2$ to values satisfying Expression (7).

$$0.4 \times |\varepsilon1'| \leq |\varepsilon2'| < 0.85 \times |\varepsilon1'| \ ...(7)$$

Here, $\varepsilon2'$ is the average value at the press bottom dead center of the second step 10B when the strain in the longitudinal direction before the first step 10A (before forming) is set as a reference value 0. That is, $\varepsilon2'$ is a total of the strain in the longitudinal direction applied by the first step 10A and the strain in the longitudinal direction applied by the second step 10B.

In a case where $|\varepsilon2'|$ is smaller than $0.4 \times |\varepsilon1'|$, there is a concern that a restoration amount of the strain illustrated in FIG. 13 excessively increases. In this case, there is a possibility that a difference in the spring back amount due to a difference in the strength of the materials cannot be absorbed to a desired value or less. Therefore, $|\varepsilon2'|$ is preferably equal to or greater than $0.4 \times |\varepsilon1'|$ and more preferably equal to or greater than $0.45 \times |\varepsilon1'|$.

Meanwhile, in a case where $|\varepsilon2'|$ is greater than $0.85 \times |\varepsilon1'|$, there is a concern that the restoration amount of strain after the second step 10B is insufficient. In this case, there is a possibility that a difference in the spring back amount due to a difference in the strength of the materials cannot be reduced to a desired value or less. Therefore, $|\varepsilon2'|$ is preferably less than $0.85 \times |\varepsilon1'|$ and more preferably equal to or less than $0.7 \times |\varepsilon1'|$.

Here, in the above description, a case where each die set in the first step 10A and the second step 10B is set such that the first vertical wall angle $\theta1$ and the second vertical wall angle $\theta2$ satisfy Expression (1) and the like over the entire length of the top plate portion 1A in the longitudinal direction has been exemplified. However, the present invention is not limited thereto.

For example, only a region that is the bending portion 2 in a top view is set such that the first vertical wall angle $\theta1$ and the second vertical wall angle $\theta2$ satisfy Expression (1) and the like. The vertical wall angle of each die set in the first step 10A and the second step 10B in the straight portion other than the bending portion 2 may be set to, for example, the vertical wall angle of the target component shape 1.

(Design of Die Set)

In a case of designing the die shapes (shapes of the forming surfaces) of the first step 10A and the second step 10B, a case of starting the design without considering the vertical wall angle of the target component shape 1 is considered. In addition, a case of designing from the die set in the second step 10B is considered. In these cases, there is a possibility that an appropriate die shape is not obtained or a very long time is spent to obtain the die shape.

On the other hand, in the present embodiment, in designing the vertical wall angles of the die sets in the first step 10A and the second step 10B, the following is performed.

First, the CAE analysis or the actual pressing is performed with the vertical wall angle $\theta 1$ of the die set in the first step 10A being a value smaller than the vertical wall angle $\theta 0$ of the target component shape 1. From the evaluation by the execution, a condition under which the vertical wall angle $\theta 1'$ of the intermediate component 4 after the spring back in the first step 10A is smaller than the vertical wall angle $\theta 0$ of the target component shape 1 is found.

Then, in the second step 10B, CAE analysis or actual pressing is performed with a die shape having a vertical wall angle equal to or greater than the vertical wall angle $\theta 0$ of the target component shape 1. From the evaluation by the execution, a condition under which the vertical wall angle after the spring back in the second step 10B is the vertical wall angle $\theta 0$ of the target component shape 1 and the twisting is suppressed is found.

According to such a design of the die sets, it is possible to design the die shapes in a short time.

As described above, in the present embodiment based on the present disclosure, even in a case where a high-tensile strength steel sheet having a tensile strength of 590 PMa or more or an ultra-high-tensile strength steel sheet having a tensile strength of 980 MPa or more is used, it is possible to significantly reduce the dimensional accuracy fluctuation in a case where the material strength fluctuation occurs with a simple die structure. Therefore, it is possible to obtain a high-accuracy component having a shape close to the desired component shape.

[Second Embodiment]

Next, a second embodiment based on the present invention will be described.

A basic configuration of the present embodiment is the same as that of the first embodiment. The same reference numerals will be assigned to the same configurations and the like as those in the first embodiment.

(Target Component Shape)

In the same manner as in the first embodiment, the present embodiment is an example that can be applied to a case where the cross section has a U-shape, a hat shape having a flange portion, or an L-shape. The cross-sectional L shape is a shape in which the vertical wall portion 1B is present only in one side of the top plate portion 1A in the width direction.

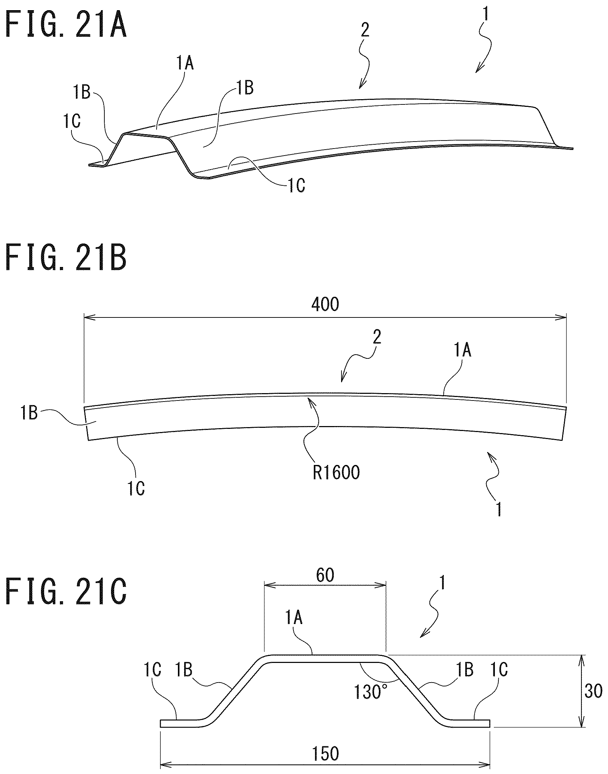

In addition, in the present embodiment, in the same manner as in the first embodiment, a target component shape having one or two or more bending portions that are bent in a direction intersecting the longitudinal direction along the longitudinal direction is targeted. However, the target component shape 1 of the present embodiment is an example of a case where the bending portion 2 has the "vertically bent shape" to be bent toward the top plate portion 1A side as illustrated in FIG. 21.

The example of FIG. 21 is an example in which the bending portion 2 is bent to be convex toward the top plate portion 1A side. In addition, the dimensions used in examples are also illustrated in FIG. 21. However, the present invention is not limited to these dimensions. The unit of the dimension is [mm].

The example of FIG. 21 is an example in which one bending portion 2 having a hat shape in a cross section is formed over the entire length in the longitudinal direction. However, the target component shape may be such that a part thereof along the longitudinal direction is a bending portion. The target component shape may be, for example, a shape in which a flat portion (straight portion) of the top plate portion 1A is connected to at least one side of the bending portion in a lateral direction along the longitudinal direction in a side view.

However, in the present invention, the target component shape 1 having a plurality of bending portions 2 along the longitudinal direction is also a manufacturing target. In this case, a straight portion may not be present between the adjacent bending portions 2.

(Manufacturing Method)

A method for manufacturing a press formed article of the present embodiment is a method for manufacturing a metal sheet 3 (blank material) into the target component shape 1 described above by press forming. The present invention is an invention suitable for a case where a material of the metal sheet 3 is a high-tensile strength steel sheet or an ultra-high-tensile strength steel sheet. The high-tensile strength steel sheet is a steel sheet having a tensile strength of 590 MPa or more. The present invention can be applied to the metal sheet 3 such as a mild steel sheet or an aluminum sheet.

The method for manufacturing the press formed article of the present embodiment includes the first step 10A and the second step 10B in the same manner as in the first embodiment (see FIG. 2).

(First Step 10A)

In the first step 10A, in the same manner as in FIG. 4 which is a schematic view, the die 11 as the upper die and the die 12 as the lower die having the first vertical wall angle θ1 smaller than the vertical wall angle θ0 of the target component shape 1 are used. The first step 10A is a step of press-forming the metal sheet into the intermediate component 4 using the die set 11 and 12. The intermediate component 4 has a top plate portion and a vertical wall portion having a width following the target component shape 1, such as matching the width of the target component shape 1. The intermediate component 4 may have a portion to be cut in a trimming step which is a subsequent step.

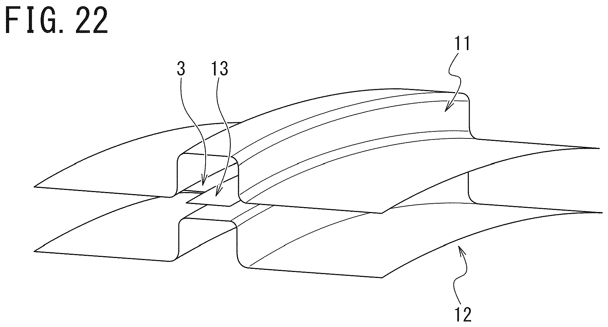

As illustrated in FIG. 22, the die set used in the first step 10A includes the die 11 (upper die) and the punch 12 (lower die). Forming surfaces of the die 11 and the punch 12 used in the first step 10A have forming surfaces in which at least the vertical wall angle is different from that of the desired target component shape 1. In addition, the die set used in the first step 10A includes the pad 13 that presses a portion of the metal sheet 3 which is the top plate portion 1A against a top plate forming surface of the punch 12.

That is, in the first step 10A, as illustrated in FIG. 22, the pressing is performed by the die 11 and the punch 12 in a state where the metal sheet 3 is pressed by the top plate forming surface of the punch 12 and the pad 13.

However, as described above, the first vertical wall angle θ1 on the forming surfaces of the die set 11 and 12 used in the first step 10A is set to an angle smaller than the vertical wall angle θ0 of the target component shape 1.

However, the first vertical wall angle θ1 is set according to a vertical wall angle θ1' of the intermediate component 4. The vertical wall angle θ1' is a vertical wall angle of the intermediate component 4 which is manufactured by press-forming the metal sheet 3 in the first step 10A and then released. That is, the first vertical wall angle θ1 is set to be smaller than the vertical wall angle θ0 of the target component shape 1. Then, the intermediate component 4 has a shape after the release, that is, a shape of the intermediate component 4 after spring back.

The first vertical wall angle θ1 may be evaluated and set by, for example, CAE analysis or actual pressing.

The first vertical wall angle θ1 is set individually for each vertical wall angle on the right and left vertical wall portion 1B side as described above.

One vertical wall portion 1B side of the vertical wall angles on the right and left vertical wall portion sides may be set to the first vertical wall angle θ1 as described above. In this case, the vertical wall angle on the other vertical wall portion 1B side may be set to an angle equal to the vertical wall angle θ0 of the target component shape 1. Even in a case where the first vertical wall angle is set only on the one vertical wall portion 1B side based on the present disclosure, an effect is exhibited. However, it is preferable that the first vertical wall angle θ1 is set as described above for both the vertical wall angles on the right and left vertical wall portion 1B sides.

(Second Step 10B)

The second step 10B is a step of press-forming the intermediate component 4 manufactured in the first step 10A to manufacture a press formed article consisting of the target component shape 1.

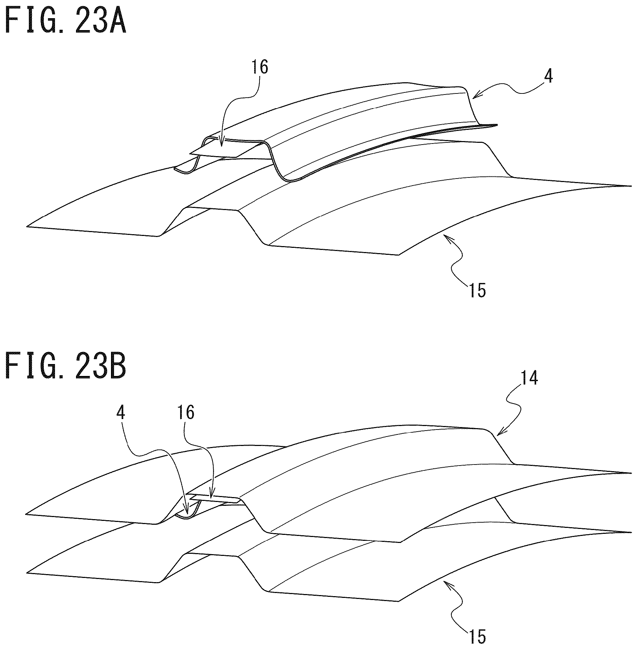

A forming surface of a die set used in the second step 10B has a second vertical wall angle θ2 which is an angle equal to or greater than the vertical wall angle θ0 of the target component shape 1. In addition, forming surfaces of die set 14 and 15 used in the second step 10B have forming surfaces 14A and 15A which follow the desired target component shape 1 except for the vertical wall angle, in the same manner as in FIG. 23A and FIG. 6 which is a schematic view. The die set 14 and 15 are a die 14 as an upper die and a punch 15 as a lower die.

It is preferable that the second vertical wall angle θ2 is greater than the vertical wall angle θ0 of the target component shape 1. That is, in the second step 10B, bending back processing of the vertical wall portion 1B is performed. Therefore, it is preferable to design a forming surface shape of the die set in the second step 10B such that the second vertical wall angle θ2 is greater than the vertical wall angle θ0 of the target component shape 1.

In addition, the die set used in the second step 10B includes a pad 16 which presses the top plate portion of the intermediate component 4.

Here, the second vertical wall angle θ2 is set to an angle equal to or greater than the vertical wall angle θ0. Therefore, the second vertical wall angle θ2 is greater than the vertical wall angle θ1' of the intermediate component 4. Therefore, there is a problem in adopting the following forming method in the forming in the second step 10B. That is, a case where the pad 16 is extended from the die 14 side to perform forming by sandwiching the top plate portion of the intermediate component 4 between the pad 16 and the punch 15 is considered. In this case, there is a problem in that, in a case where the intermediate component 4 is set on the punch 16, the intermediate component 4 is likely to be formed in an unstable state without being placed at a predetermined position of the punch 16.

Therefore, in the second step 10B of the present embodiment, the intermediate component 4 is set on the pad 16 in a state where the pad 16 is extended from a top plate forming surface of the punch 16 before forming. After that, the pad 16 is used to press the top plate portion of the intermediate component 4 against the top plate forming surface of the die 14 (see FIG. 6A). In that state, the intermediate component 4 is press formed by the pad 16 and the die 14. In the present embodiment, the second step 10B is configured to perform the above-described operation.

(Mutual Relationship between Vertical Wall Angles)

Here, it is disclosed that the vertical wall angle of the target component shape 1 is θ0. It is disclosed that the first vertical wall angle on the forming surfaces of the die set 11 and 12 in the first step 10A is θ1. It is disclosed that the vertical wall angle of the intermediate component 4 is θ1'. The vertical wall angle θ1' is an angle after the release and the spring back. It is disclosed that the second vertical wall angle on the forming surfaces of the die set 14 and 15 in the second step 10B is θ2.

In the present embodiment, the vertical wall portion 1B is present on the right and left sides, but it is preferable that the following conditions are satisfied individually for the right and left sides.

It is preferable that the first vertical wall angle θ1 and the second vertical wall angle θ2 are set to satisfy Expression (1). That is, it is preferable that the second vertical wall angle θ2 of the die set in the second step 10B is set to be greater than the vertical wall angle θ0 of the target component shape 1.

$$\theta 1 < \theta 1' < \theta 0 < \theta 2 \ ...(1)$$

The second vertical wall angle θ2 is preferably less than 1.05 times the vertical wall angle θ0.

In addition, it is preferable to set the first vertical wall angle θ1 and the second vertical wall angle θ2 to values satisfying Expression (8).

$$0.4 \times \varepsilon t1 \leq \varepsilon t2 < 0.9 \times \varepsilon t1 \ ...(8)$$

Here, for the distribution of the strain in the longitudinal direction at the press bottom dead center in the press forming of the second step 10B, an absolute value of the average value of strains of the top plate portion is defined as $\varepsilon t2$ at least at a position of the bending portion. In addition, for the distribution of the strain in the longitudinal direction at the press bottom dead center in the press forming of the first step, an absolute value of the average value of strains of the top plate portion is defined as $\varepsilon t1$ at least at a position of the bending portion.

In addition, in a case where the cross-sectional shape is a hat shape having a flange portion, it is preferable to set the first vertical wall angle θ1 and the second vertical wall angle θ2 to values satisfying Expression (9).

$$0.4 \times \varepsilon b1 \leq \varepsilon b2 < 0.9 \times \varepsilon b1 \ ...(9)$$

Here, for the distribution of the strain in the longitudinal direction at the press bottom dead center in the press forming of the second step, an absolute value of the average value of strains of the flange portion is defined as $\varepsilon b2$ at least at a position of the bending portion. In addition, for the distribution of the strain in the longitudinal direction at the press bottom dead center in the press forming of the first step, an absolute value of the average value of strains of the flange portion is defined as $\varepsilon b1$ at least at a position of the bending portion.

In a case where the cross-sectional shape is a U-shape not having a flange portion, the absolute value of the average value of the strains in the lower half of the vertical wall portion may be $\varepsilon b1$ and $\varepsilon b2$ instead of the absolute value of the average value of the strains in the flange portion.

Here, the reason for the conditions of Expression (8) and Expression (9) will be described later.

In addition, the above-described appropriate range (value) may change depending on the component shape or the material strength. Therefore, it is preferable to examine each condition for each component.

(Operation and Others)

<Comparative Forming Method>

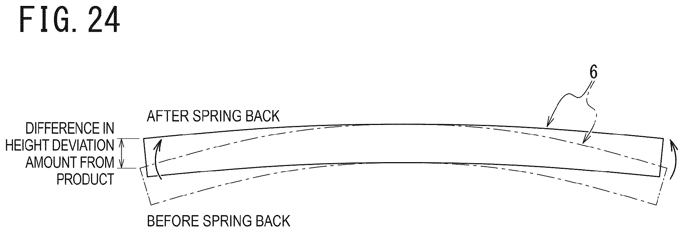

Here, as the comparative forming method, the pad that presses the entire surface of the top plate portion was used to apply pad-attached stamping. FIG. 24 illustrates shapes before and after the die set release (before and after the spring back). Here, the target component shape is a shape illustrated in FIG. 21, and it is a case in which the target component shape is obtained by one time of press forming. That is, the entire surface of the metal sheet 3 serving as the top plate portion 1A is sandwiched between the punch and the pad. In that state, the press forming was performed with the punch (lower die) and the die (upper die). The forming surfaces (die shape) of the punch and the die were set to the shape following the target component shape 1.

In this case, as found from FIG. 24, the bending in a side view changes before and after the spring back.

Specifically, it is found that a radius of curvature in a side view increases due to the spring back along the longitudinal direction.

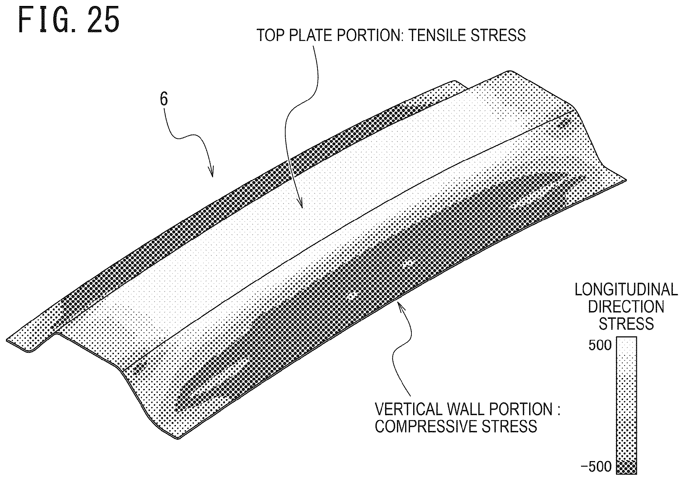

FIG. 25 illustrates a distribution of stress in the longitudinal direction at the center of the plate thickness at the press bottom dead center of a component 6 in a case where the comparative forming method is adopted.

As illustrated in FIG. 25, a tensile stress is generated over a wide range in the top plate portion. In addition, a compressive stress is generated over a wide range in the flange portion. It is considered that the spring back in the longitudinal direction described above is generated by the release of these stresses during the release of the die set. The spring back in the longitudinal direction is called camber back. As the material strength increases, a residual stress increases, and the spring back amount tends to increase. In addition, in a case where the material strength increases, the material strength fluctuation during mass production of the material also relatively increases. Therefore, there is also a problem of the dimensional accuracy fluctuation in which the material strength fluctuates between the coils described above (between the production lots of the sheet) and the spring back amount changes.

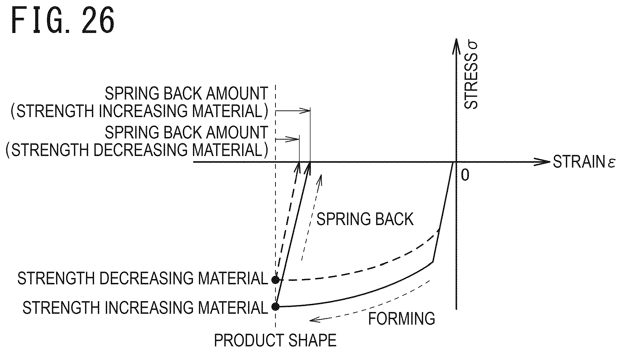

The dimensional accuracy fluctuation will be described with reference to a schematic view of a stress-strain relationship. FIG. 26 illustrates a relationship between a stress and a strain of the flange portion during typical forming, in which the comparative forming method is adopted. Here, the stress of the flange portion is the longitudinal direction stress. In addition, FIG. 26 illustrated a schematic view of two types of materials of a strength increasing material and a strength decreasing material assuming the fluctuation in material strength. In this example, in a case where the material is formed into a product shape, the material of the flange portion is formed to be decreased. Therefore, although the compressive stress is generated in the flange portion, there is a difference in the stress value at the bottom dead center of forming between the strength increasing material and the strength decreasing material of the material as illustrated in FIG. 26. In FIG. 26, the position of the product shape is the bottom dead center of forming.

In a case where the die set is released from the state of the bottom dead center of forming, the camber back (spring back) occurs. Then, a curvature change in the longitudinal direction occurs due to the camber back. Further, in addition to this, a camber back amount changes between the strength increasing material and the strength decreasing material. That is, the dimensional accuracy fluctuation occurs between the materials. In a case where the material strength increases, the dimensional accuracy fluctuation increases, and it is beyond the dimensional tolerance of the product. Therefore, in a material having a high material strength, the dimensional accuracy fluctuation is a significant problem.

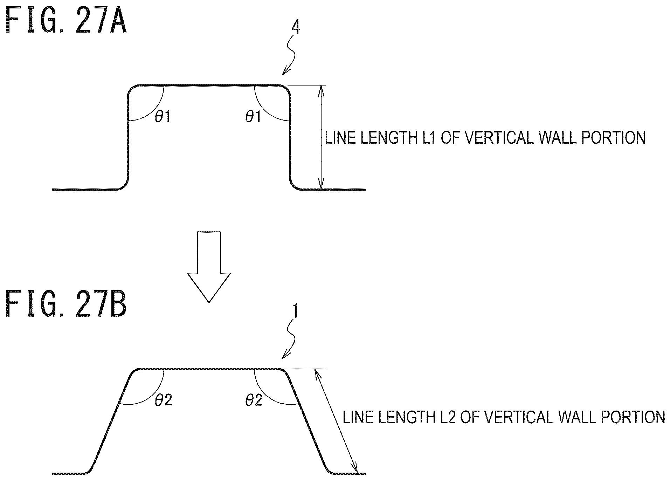

In order to reduce the camber back and the dimensional accuracy fluctuation, in the present embodiment, the cross-sectional shape at the bottom dead center of forming illustrated in FIG. 27 was set. That is, in the press forming method of the present embodiment, in the first step 10A, the forming is performed such that the vertical wall angle $\theta1$ between the top plate portion and the vertical wall portion is smaller than the vertical wall angle of the target component shape (see FIG. 27A). In addition, in the second step 10B, the press forming is performed to have the vertical wall angle $\theta2$ greater than the vertical wall angle after the spring back in the first step 10A (see FIG. 27B). In addition, in the present embodiment, as illustrated in FIG. 27, it is preferable that, in the first step 10A, the forming is performed such that a line length L1 of the vertical wall portion is temporarily equal to or greater than a line length of the vertical wall portion of the target component shape. The line length of the vertical wall portion of the target component shape corresponds to a line length L2. Thereafter, it is preferable that, in the second step 10B, the forming is performed such that the line length L2 of the vertical wall portion is a line length of the vertical wall portion of the target component shape.

Here, in the first step 10A, the intermediate component 4 after being released from the die set is considered. The vertical wall angle $\theta1'$ of the intermediate component 4 is slightly greater than the vertical wall angle $\theta1$ of the die set in the first step due to the spring back. It is preferable that the die set in the first step 10A is designed such that the vertical wall angle $\theta1'$ after the spring back in the first step is smaller than the vertical wall angle $\theta0$ of the target component shape. In the present embodiment, as the metal sheet 3, a high-tensile strength steel sheet is used as a basic target. However, the present invention is not necessarily limited to the high-tensile strength steel sheet, and a mild steel sheet, an aluminum sheet, or the like may be used.

In addition, in the second step 10B, it is necessary to bend the vertical wall portion back. Therefore, it is preferable to design the die set in the second step 10B such that the vertical wall angle $\theta2$ in the second step 10B is an angle equal to or greater than the vertical wall angle $\theta0$ of the target component shape.

In the present embodiment, the target component shape 1 includes the right and left vertical wall portions 1B which forms a pair on both sides of the top plate portion 1A in the width direction and the flange portion 1C, and has a cross-sectional hat shape. The first step 10A and the second step 10B may be performed using a die set in which at least one vertical wall portion side of the right and left vertical wall portions has the first vertical wall angle $\theta1$ and the second vertical wall angle $\theta2$.

In the present embodiment, a die shape in the first step 10A and a die shape in the second step 10B are designed as described above. As a result, the stress causing the camber back is reversed in the second step 10B. As a result, the camber back amount and the dimensional accuracy fluctuation of the camber back are reduced. In addition, a factor stress of a change portion in the vertical wall angle is also bent back in the second step 10B. Accordingly, the stress of the punch shoulder is reversed, or the stress in the opposite direction is applied to the periphery of the punch shoulder. As a result, in the present embodiment, both the change in the vertical wall angle and the dimensional accuracy fluctuation thereof are reduced.

Here, draw forming or stamping may be applied in the first step 10A. In addition, in the second step 10B, the forming may be performed into the target component shape. However, in the second step 10B, in a case where the pad is extended from the die side to perform forming by sandwiching the intermediate component between the pad and the punch, as in the typical forming, the following problem may occur. That is, in a case where the intermediate component is set in the lower die, the vertical wall angle θ1' of the intermediate component 4 is smaller than the vertical wall angle θ2 of the die set (product) in the second step. Therefore, the intermediate component may be formed in an unstable state in which the intermediate component is propped on the lower die (punch). As a result, there is a concern that misalignment or the like occurs, and the target shape is not obtained.

In order to avoid this, in the embodiment, as illustrated in FIG. 23, in the second step 10B, the intermediate component 4 is set on the pad 16 in a state where the pad 16 is extended from the top plate forming surface of the punch 15 before forming. The forming is performed in a state where the top plate portion of the intermediate component 4 is sandwiched between the die 14 and the pad 16. By adopting such a forming method, it is possible to avoid the unstable state in which the intermediate component 4 is propped on the punch 15 in the second step, and to perform the stable forming.

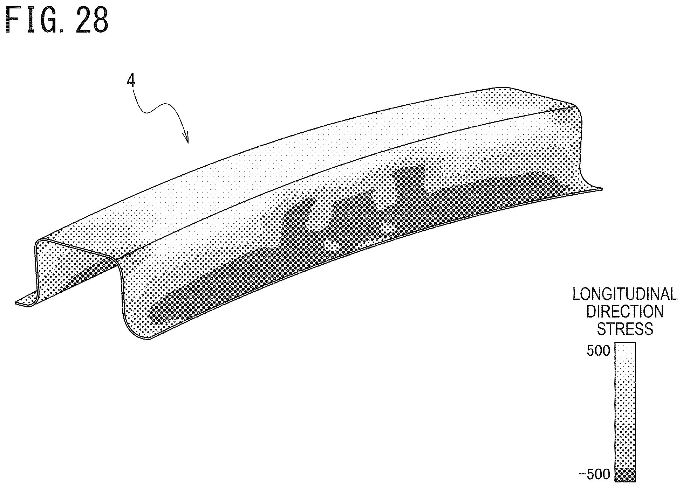

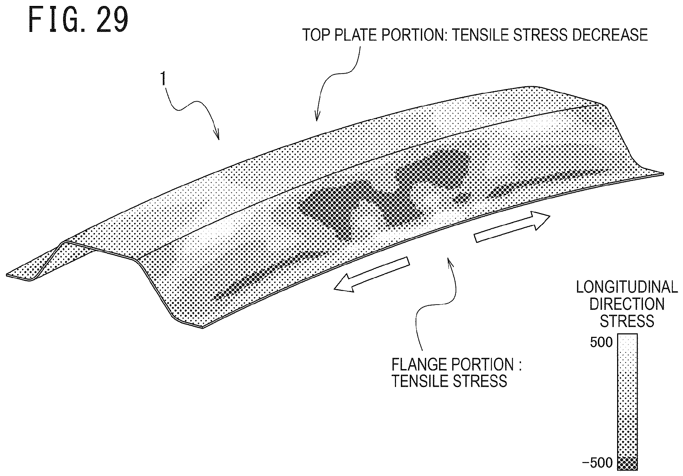

FIGS. 28 and 29 illustrate stress distributions at the center of the plate thickness in the longitudinal direction at the bottom dead center of forming in a case where the press formed article is formed by the method of the present embodiment. Here, θ1 = 95° and θ2 = 130° were set. FIG. 28 illustrates a stress distribution after the first step 10A, and FIG. 29 illustrates a stress distribution after the second step 10B. As illustrated in FIG. 28, at the bottom dead center of forming in the first step 10A, the compressive stress is generated over a wide range on the flange portion. In addition, a tensile stress is generated over a wide range in the top plate portion. Meanwhile, as illustrated in FIG. 29, at the bottom dead center of forming in the second step 10B, the tensile stress is reversed in the flange portion, and the tensile stress is reduced in the top plate portion. Therefore, by adopting the method of the present embodiment, the stress is reversed or reduced as compared with the typical method.

This is due to the following reason. That is, in the second step 10B, the flange portion is formed to be extended in the longitudinal direction. As a result, the flange portion is formed in a direction in which the line length is extended, and thus the tensile stress is generated. In addition, the top plate portion is formed in a direction in which the line length is reduced as affected by this, and as a result, the tensile stress is reduced. In a case of the cross-sectional U-shape without a flange portion, the lower side of the vertical wall portion functions in the same manner as the flange portion.

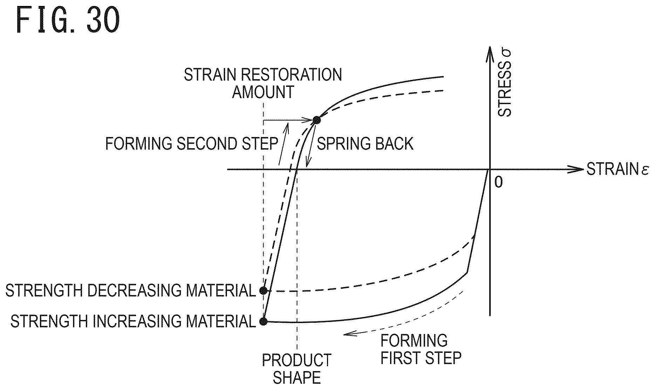

As described above, the dimensional accuracy fluctuation in a case of forming by the method of the present embodiment will be described with reference to a schematic view of the stress-strain relationship. FIG. 30 is a view illustrating a relationship between the stress and the strain of the flange portion by the method of the present embodiment. FIG. 30 illustrated a schematic view of two types of materials of the strength increasing material and the strength decreasing material assuming the fluctuation in material strength.

In the present embodiment, in the first step 10A, the forming is performed at the vertical wall angle θ1 smaller than the vertical wall angle θ0 of the target component shape 1. As a result, the strain and the stress greater than those in the typical method (comparative forming method) are applied. Thereafter, in the present embodiment, in the second step 10B, the forming is performed at the vertical wall angle θ2 equal to or greater than the vertical wall angle θ0 of the target component shape 1. As a result, the material of the flange portion is formed in a direction in which the material is extended. As a result, the compressive stress is reversed to the tensile stress. Here, as illustrated in FIG. 30, curves of the history of the strength increasing material and the strength decreasing material of the material intersect each other in a low-stress region when the stress is reversed. By setting the bottom dead center of forming aiming at the intersection point, the forming may be performed by reducing the vertical wall angle in the first step 10A. In this case, particularly, the stress and the stress difference at the bottom dead center of forming of the strength increasing material and the strength decreasing material of the material are further reduced, and the camber back and the dimensional accuracy fluctuation are further reduced.

In a case where the bending of one bending portion in the longitudinal direction does not have a constant curvature, only the vertical wall angle of a part of the bending portion in the first step 10A may be reduced. In the component shape consisting of a plurality of bending portions, the vertical wall angle of at least one or more of the bending portions in the first step 10A may be reduced.

In addition, in the second step 10B, a vertical wall portion of the intermediate component 4 formed in the first step 10A is formed to be bent back. Accordingly, the stress of the punch shoulder in the cross-sectional direction is reversed, or the stress in the opposite direction is applied to the periphery of the punch shoulder. Therefore, the change of the vertical wall angle and the dimensional accuracy fluctuation thereof are decreased. However, in a case where the forming is performed under the conditions of reducing the camber back amount and the dimensional accuracy fluctuation of the camber back, the following phenomenon may occur. That is, the stress of the punch shoulder or the stress in the periphery of the punch shoulder is excessively reversed. Therefore, the spring back may occur in a direction of becoming smaller than the vertical wall angle of the die set in the second step.

Therefore, it is preferable to design the vertical wall angle after the spring back in the second step 10B is the target component shape. That is, it is preferable that the vertical wall angle θ2 of the die set in the second step 10B is designed to be a size equal to or greater than the vertical wall angle θ0 of the product.

Here, in the present embodiment, the strain of the top plate portion is described with t added thereto, such as εt1 and εt2. In addition, the strain of the flange portion is described with b added thereto, such as εb1 and εb2.

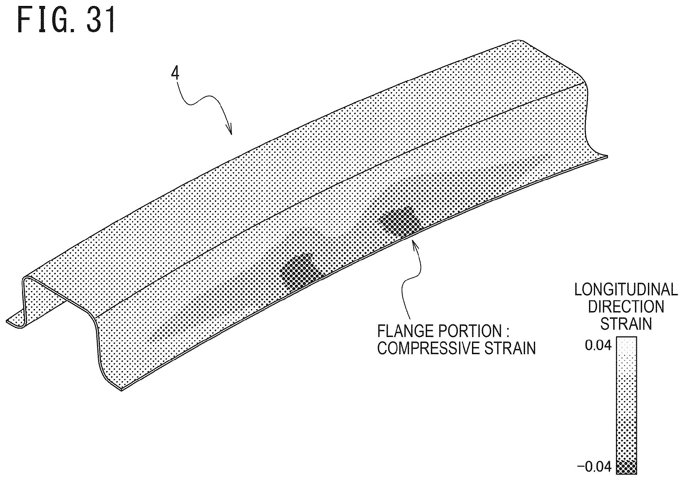

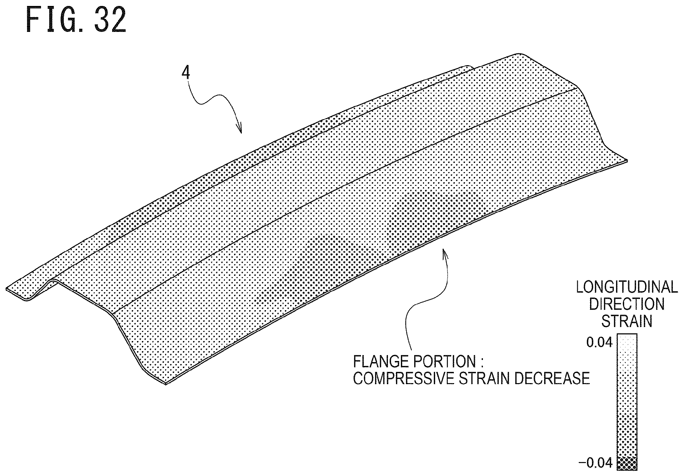

In addition, FIGS. 31 and 32 illustrate strain distributions at the center of the plate thickness in the longitudinal direction at the bottom dead center of forming in a case where the press formed article is formed by the manufacturing method of the present embodiment. FIG. 31 illustrates a strain distribution in the first step. FIG. 32 illustrates a strain distribution in the second step. As illustrated in FIG. 31, in the first step 10A, large compressive strain is particularly generated in the flange portion. On the other hand, as illustrated in FIG. 32, in the second step 10B, the compressive strain of the flange portion generated in the first step 10A is reduced.

As described above, in the method of the present embodiment, the behavior of the strain is as illustrated in FIG. 30. Here, an absolute value of the average value of the strains of the top plate portion is defined as εt2 for the strain distribution in the longitudinal direction generated at the press bottom dead center in the second step 10B. In addition, an absolute value of the average value of the strains of the top plate portion is defined as εt1 for the strain distribution in the longitudinal direction generated at the press bottom dead center in the first step 10A.

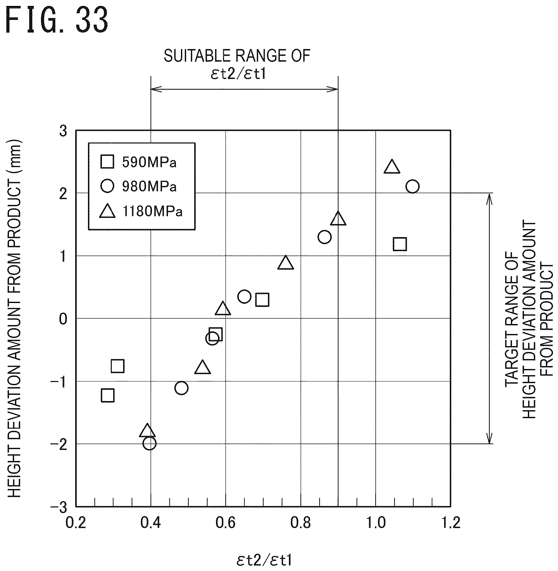

FIG. 33 is a result of investigation of a relationship between εt2/εt1 and a height deviation amount from a product after press forming, with respect to the press forming of the press formed article illustrated in FIG. 21. In FIG. 33, "□" is a result in a case where a steel sheet having a tensile strength of about 590 MPa is used. "o" is a result in a case where a steel sheet having a tensile strength of about 980 MPa is used. "Δ" is a result in a case where a steel sheet having a tensile strength of about 1180 MPa is used.

The height deviation amount from the product on a vertical axis of FIG. 33 is a value representing a difference in heights between the target component shape and a component shape after the die set release, as illustrated in FIG. 24. The height deviation amount is obtained as follows. First, the position adjustment is performed such that the position of the top plate portion of the target component shape 1 and the position of the top plate portion of the shape after the die set release match each other at the longitudinal center position. In that state, in the present embodiment, the difference in heights at a longitudinal end portion illustrated in FIG. 24 was set as the height deviation amount from the product.

In the present embodiment, a target range of the height deviation amount to obtain a favorable shape is set to be within ± 2 mm. In this case, it is found from FIG. 33 that |εt2/εt1| is preferably in a range of 0.4 to 0.9.

That is, it is preferable to set the values of the vertical wall angles θ1 and θ2 of the die sets in the first step 10A and the second step 10B to be values satisfying Expression (11).

$$0.4 \times εt1 \leq εt2 < 0.9 \times εt1 \ ...(11)$$

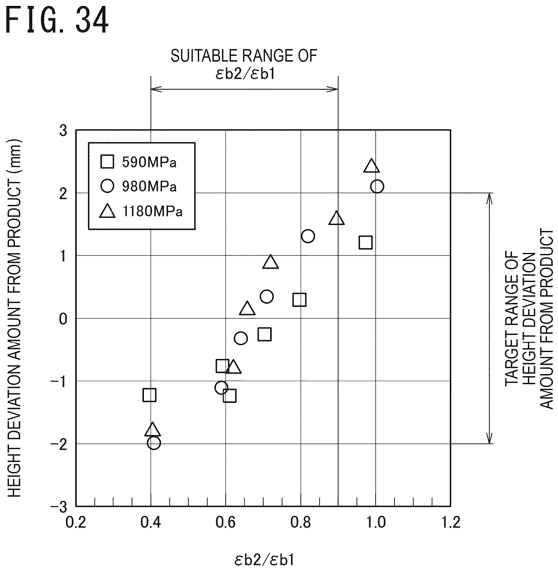

FIG. 34 is a result of investigation of a relationship between εb2/εb1 and a height deviation amount from a product after press forming, with respect to the press forming of the press formed article illustrated in FIG. 21. In FIG. 34, "□" is a result in a case where a steel sheet having a tensile strength of about 590 MPa is used. "o" is a result in a case where a steel sheet having a tensile strength of about 980 MPa is used. "Δ" is a result in a case where a steel sheet having a tensile strength of about 1180 MPa is used.

Here, an absolute value of the average value of the strains of the flange portion was defined as εb2 for the strain distribution in the longitudinal direction generated at the press bottom dead center in the second step. In addition, an absolute value of the average value of the strains of the flange portion was defined as εb1 for the strain distribution in the longitudinal direction generated at the press bottom dead center in the first step.

In the present embodiment, a target range of the height deviation amount to obtain a favorable shape is set to be within ± 2 mm. In this case, it is found from FIG. 34 that |εb2/εb1| is preferably in a range of 0.4 to 0.9.

That is, it is preferable to set the values of the vertical wall angles of the die sets in the first step and the second step to be values satisfying Expression (12).

$$0.4 \times εb1 \leq εb2 < 0.9 \times εb1 \ ...(12)$$

Here, in the present embodiment, a case where the cross section of the target component shape has a hat shape will be described. In a case where the cross section of the target component shape has a U-shape, the phenomenon that occurs in the flange portion in the first step 10A and the second step 10B occurs in a lower side portion of the vertical wall portion. Therefore, in a case where the press formed article has a U-shaped cross section without a flange portion, the following setting may be performed. That is, it is preferable that the absolute value of the average value of the strains in a portion that is the lower half of the vertical wall portion is $\varepsilon b2$ with respect to the second step 10B and $\varepsilon b1$ with respect to the first step 10A. That is, it is preferable to set the values of the vertical wall angles $\theta1$ and $\theta2$ of the die sets in the first step 10A and the second step 10B to satisfy Expression (11) or Expression (12).

Here, in a case where $\varepsilon t2$ is smaller than $0.4 \times \varepsilon t1$, there is a concern that the restoration amount of strain in the second step 10B illustrated in FIG. 30 is excessively large. In this case, there is a possibility that a difference in the spring back amount due to a difference in the strength of the materials cannot be reduced to a desired value or less. Therefore, it is preferable that $\varepsilon t2$ is $0.4 \times \varepsilon t1$ or more. It is more preferable that $\varepsilon t2$ is $0.5 \times \varepsilon t1$ or more.

Meanwhile, in a case where $\varepsilon t2$ is greater than $0.9 \times \varepsilon t1$, there is a concern that the restoration amount of strain in the second step 10B is insufficient. In this case, there is a possibility that a difference in the spring back amount due to a difference in the strength of the materials cannot be reduced to a desired value or less. Therefore, it is preferable that $\varepsilon t2$ is less than $0.9 \times \varepsilon t1$. It is more preferable that $\varepsilon t2$ is $0.8 \times \varepsilon t1$ or less.

In addition, in a case where $\varepsilon b2$ is smaller than $0.4 \times \varepsilon b1$, there is a concern that the restoration amount of strain in the second step 10B illustrated in FIG. 30 is excessively large. In this case, there is a possibility that a difference in the spring back amount due to a difference in the strength of the materials cannot be reduced to a desired value or less. Therefore, it is preferable that $\varepsilon b2$ is $0.4 \times \varepsilon b1$ or more. It is more preferable that $\varepsilon b2$ is $0.6 \times \varepsilon b1$ or more.

Meanwhile, in a case where $\varepsilon b2$ is greater than $0.9 \times \varepsilon b1$, there is a concern that the restoration amount of strain in the second step 10B is insufficient. In this case, there is a possibility that a difference in the spring back amount due to a difference in the strength of the materials cannot be reduced to a desired value or less. Therefore, it is preferable that $\varepsilon b2$ is less than $0.9 \times \varepsilon b1$. It is more preferable that $\varepsilon b2$ is $0.8 \times \varepsilon b1$ or less.

Further, in a case of designing the die shapes in the first step 10A and the second step 10B, when the designing is started without considering the vertical wall angle $\theta0$ of the product or the design is made from the die set in the second step 10B, the following may occur.

That is, there is a possibility that an appropriate die shape is not obtained or a very long time is spent to obtain the die shape.

Therefore, in the present embodiment, in designing the die shapes in the first step 10A and the second step 10B, the following may be performed. First, the CAE analysis or the actual pressing is performed with the vertical wall angle $\theta1$ of the die set in the first step 10A being a value smaller than the vertical wall angle $\theta0$ of the product. A condition under which the vertical wall angle $\theta1'$ after the spring back in the first step 10A is smaller than the vertical wall angle $\theta0$ of product is found. Then, in the second step 10B, the CAE analysis or the actual pressing is performed with a die shape having a forming surface having a vertical wall angle equal to or greater than the vertical wall angle $\theta0$ of the target component shape. A condition under which the vertical wall angle after the spring back in the second step 10B is an angle of the target component shape and the dimensional accuracy fluctuation is suppressed is found. According to such a design, it is possible to design the die shapes in a short time.

As described above, the method of the present embodiment can be suitably applied even in a case where a high-tensile strength steel sheet having a tensile strength of 590 PMa or more or an ultra-high-tensile strength steel sheet having a tensile strength of 980 MPa or more is used. That is, according to the present disclosure, it is possible to significantly reduce the dimensional accuracy fluctuation in a case where the material strength fluctuation occurs with a simple die structure. Therefore, according to the present disclosure, it is possible to obtain a high-accuracy component having a shape close to the desired component shape.

(Others)

The present disclosure may also have the following configurations.

(1) In disclosure 1, a method for manufacturing a press formed article for forming a metal sheet into a target component shape having a cross section including a top plate portion and a vertical wall portion connected to an end portion of the top plate portion in a width direction and extends in a direction different from the top plate portion, and having one or two or more bending portions which are bent along a longitudinal direction which is a direction intersecting the cross section, the method including:

in a case where an angle between the top plate portion and the vertical wall portion of the cross section is defined as a vertical wall angle,
a first step of press-forming the metal sheet into an intermediate component including the top plate portion and the vertical wall portion using a die set having a forming surface with a first vertical wall angle smaller than a vertical wall angle of the target component shape at a position of the bending portion; and
a second step of press-forming the intermediate component with a die set having a forming surface with a second vertical wall angle equal to or greater than the vertical wall angle of the target component shape at the position of the bending portion,

in which, at the position of the bending portion, for a vertical wall angle of the intermediate component after release in the first step, the first vertical wall angle is set to be an angle smaller than the vertical wall angle of the target component shape.

(2) In disclosure 2, the bending portion has a curve that is concave or convex toward a side of the vertical wall portion.

(3) In disclosure 3, in a case where the vertical wall angle of the target component shape is defined as θ0, the first vertical wall angle is defined as θ1, the vertical wall angle of the intermediate component after forming and release in the first step is defined as θ1', and the second vertical wall angle is defined as θ2,

press forming is performed using a die set having a forming surface satisfying Expression (1) for the first vertical wall angle θ1 and the second vertical wall angle θ2.

$$θ1 < θ1' < θ0 < θ2 \dots(1)$$

(4) In disclosure 4, in a case where the first vertical wall angle is defined as θ1 and the second vertical wall angle is defined as θ2,

the first vertical wall angle θ1 and the second vertical wall angle θ2 are set to satisfy Expression (2).

$$0.7 ≤ (θ1/θ2) \dots(2)$$

(5) In disclosure 5, in a case where the vertical wall angle of the target component shape is defined as θ0 and the first vertical wall angle is defined as θ1,

the first vertical wall angle θ1 is set to be a value satisfying Expression (3).

$$0.75 ≤ (θ1/θ0) \dots(3)$$

(6) In disclosure 6, in a case where the second vertical wall angle is defined as θ2 and the vertical wall angle of the intermediate component after forming and release in the first step is defined as θ1',

the second vertical wall angle θ2 is set to be a value satisfying Expression (4).

$$0.8 ≤ (θ1'/θ2) \dots(4)$$

(7) In disclosure 7, in a case where the vertical wall angle of the target component shape is defined as θ0 and the second vertical wall angle is defined as θ2,

the second vertical wall angle θ2 is set to be a value satisfying Expression (5).

$$(θ2/θ0) < 1.05 \dots(5)$$

(8) In disclosure 8, in a case where the target component shape in which the bending portion is bent to be convex to a vertical wall portion side is targeted,

for a distribution of a strain in the longitudinal direction at a press bottom dead center in the press forming of the second step, at the position of the bending portion, an average value of strains in a lower half of a vertical wall of the vertical wall portion that is convex in a top view is defined as ε2, and

for a distribution of a strain in the longitudinal direction at a press bottom dead center in the press forming of the first step, at the position of the bending portion, an average value of strains in the lower half of the vertical wall of the vertical wall portion that is convex in the top view is defined as ε1,

the first vertical wall angle and the second vertical wall angle are set to be values satisfying Expression (6).

$$0.4 × |ε1| ≤ |ε2| < 0.85 × |ε1| \dots(6)$$

(9) In disclosure 9, in a case where the target component shape in which the bending portion is bent to be concave to a vertical wall portion side is targeted,

for a distribution of a strain in the longitudinal direction at a press bottom dead center in the press forming of the second step, at the position of the bending portion, an average value of strains in a lower half of a vertical wall of the vertical wall portion that is concave in a top view is defined as ε2', and

for a distribution of a strain in the longitudinal direction at a press bottom dead center in the press forming of the first step, at the position of the bending portion, an average value of strains in the lower half of the vertical wall of the vertical wall portion that is concave in the top view is defined as $\varepsilon1'$,
the first vertical wall angle and the second vertical wall angle are set to be values satisfying Expression (7).

$$0.4 \times |\varepsilon1'| \leq |\varepsilon2'| < 0.85 \times |\varepsilon1'| \quad ...(7)$$

(10) In disclosure 10, the bending portion has a curve that is concave or convex toward a top plate portion side.
(11) In disclosure 11, in a case where the vertical wall angle of the target component shape is defined as $\theta0$, the first vertical wall angle is defined as $\theta1$, the vertical wall angle of the intermediate component after forming and release in the first step is defined as $\theta1'$, and the second vertical wall angle is defined as $\theta2$,
press forming is performed using a die set having a forming surface satisfying Expression (1) for the first vertical wall angle $\theta1$ and the second vertical wall angle $\theta2$.

$$\theta1 < \theta1' < \theta0 < \theta2 \quad ...(1)$$

(12) In disclosure 12, in a case where, for a distribution of a strain in the longitudinal direction at a press bottom dead center in the press forming of the second step, at the position of the bending portion, an absolute value of an average value of strains of the top plate portion is defined as $\varepsilon t2$, and

for a distribution of a strain in the longitudinal direction at a press bottom dead center in the press forming of the first step, at the position of the bending portion, an absolute value of an average value of strains of the top plate portion is defined as $\varepsilon t1$,
the first vertical wall angle and the second vertical wall angle are set to be values satisfying Expression (8).

$$0.4 \times \varepsilon t1 \leq \varepsilon t2 < 0.9 \times \varepsilon t1 \quad ...(8)$$

(13) In disclosure 13, in a case where the cross section has a U-shape, or a hat shape having a flange portion,

for a distribution of a strain in the longitudinal direction at a press bottom dead center in the press forming of the second step, at the position of the bending portion, in a case where the cross section has the U-shape, an absolute value of an average value of strains in a lower half of the vertical wall portion is defined as $\varepsilon b2$, and in a case where the cross section has the hat shape having the flange portion, an absolute value of an average value of strains of the flange portion is defined as $\varepsilon b2$, and
for a distribution of a strain in the longitudinal direction at a press bottom dead center in the press forming of the first step, at the position of the bending portion, in a case where the cross section has the U-shape, an absolute value of an average value of strains in the lower half of the vertical wall portion is defined as $\varepsilon b1$, and in a case where the cross section has the hat shape having the flange portion, an absolute value of an average value of strains of the flange portion is defined as $\varepsilon b1$,
the first vertical wall angle and the second vertical wall angle are set to be values satisfying Expression (9).

$$0.4 \times \varepsilon b1 \leq \varepsilon b2 < 0.9 \times \varepsilon b1 \quad ...(9)$$

(14) In disclosure 14, the die set used in the second step includes a die constituting one of an upper die and a lower die, and a punch constituting the other one of the upper die and the lower die, and
in the second step, the press forming is performed in a state where the top plate portion of the intermediate component is sandwiched by a top plate forming surface of the die and a pad which is extended from a top plate forming surface of the punch.
(15) In disclosure 15, a method for designing a die set used in the method for manufacturing a press formed article according to any one of disclosures 1 to 9, in which,

when designing a vertical wall angle of each die set in the first step and the second step,
first, CAE analysis or actual pressing is performed with the vertical wall angle of the die set in the first step being a value smaller than a vertical wall angle of a product, and a condition under which a vertical wall angle after spring back in the first step is smaller than the vertical wall angle of the product is found to set the first vertical wall angle, and
then, in the second step, CAE analysis or actual pressing is performed with a die shape having a forming surface of a vertical wall angle equal to or greater than the vertical wall angle of the target component shape, and a condition under which a component shape after spring back in the second step satisfies a tolerance of the vertical wall angle of the target component shape and twisting is found to set the second vertical wall angle.

(16) In disclosure 16, a method for designing a die set used in the method for manufacturing a press formed article according to any one of disclosures 10 to 13, in which,

when designing a vertical wall angle of each die set in the first step and the second step,

first, CAE analysis or actual pressing is performed with the vertical wall angle of the die set in the first step being a value smaller than a vertical wall angle of a product, and a condition under which a vertical wall angle after spring back in the first step is smaller than the vertical wall angle of the product is found to set the first vertical wall angle, and

then, in the second step, CAE analysis or actual pressing is performed with a die shape having a forming surface of a vertical wall angle equal to or greater than the vertical wall angle of the target component shape, and a condition under which a component shape after spring back in the second step satisfies a tolerance of the vertical wall angle of the target component shape is found to set the second vertical wall angle.

Examples

The effect of reducing the twisting spring back by the press forming method based on the present invention is confirmed. In order to confirm this, press forming analysis and spring back analysis by a finite element method (FEM) were performed. The results thereof will be described below.

[Examples for First Embodiment]

(Example 1)

In the present example, the target component shape 1 was set to be a laterally bent shape that is bent in the width direction of the top plate portion at the center portion along the longitudinal direction illustrated in FIG. 1. In this case, the metal sheet 3 (blank material) used for the press forming was two types of steel sheet having tensile strengths of about 980 MPa and about 1180 MPa. This is because two types of material strengths are evaluated in order to also compare the dimensional accuracy fluctuation. Plate thicknesses t of the two types of steel sheets were both 1.4 mm.
A case where the blank material 3 (metal sheet) is press formed is a target. The first vertical wall angle $\theta 1$ of the die set in the first step 10A was reduced. The press forming analysis and the spring back analysis in this case were performed, and the twisted amount of the component before and after the spring back was measured.
Here, the vertical wall angle $\theta 2$ of the die set in the second step 10B was set by selecting from 105°, 110°, and 115°. Then, the vertical wall angle $\theta 1$ of the die set in the first step 10A was changed between 90° and 115°, and the FEM analysis for evaluation was performed.
The twisted amount was obtained as follows. First, the position adjustment was performed such that the target component shape 1 and a shape after die set release match the inclination of the top plate of the longitudinal center cross section. Then, an evaluation was performed with the inclination angle of the top plate portion in the cross section of a longitudinal end portion taken along line A-A' illustrated in FIG. 8. The counterclockwise twisting was indicated by a plus sign, and the clockwise twisting was indicated by a minus sign.
In this example, the twisted amount within ± 2.0° was evaluated as "Pass". In addition, a difference in the twisted amount between the 980 MPa material and the 1180 MPa material within ± 1.0° was evaluated as "Pass".

(First Example)

In a first example, the vertical wall angle $\theta 2$ of the die set in the second step 10B was fixed to 115°. The evaluation in Table 1 is a result in a case where the vertical wall angle $\theta 1$ of the die set in the first step 10A is set by selecting from 90°, 95°, and 115°.
In the first example, the vertical wall angle $\theta 0$ of the target component shape 1 was set to 110°.
The evaluation results of the first example are shown in Table 1.

[Table 1]

| No. | Vertical wall angle θ1 of die set in first step [°] | Vertical wall angle θ2 of die set in second step [°] | Material | Strain at press bottom dead center of first step | | After spring back of first step | | | | Strain at press bottom dead center of second step | | After spring back of second step | | | | Note |
|---|---|---|---|---|---|---|---|---|---|---|---|---|---|---|---|---|
| | | | | Convex side strain \|ε1\| | Concave side strain \|ε1'\| | Concave side vertical wall angle θ1' in top view [°] | Convex side vertical wall angle θ1' in top view [°] | Twisted amount [°] | Difference in twisted amount between 980-1180 [°] | Convex side strain \|ε2\| | Concave side strain \|ε2'\| | Concave side vertical wall angle θ2' in top view [°] | Convex side vertical wall angle θ2' in top view [°] | Twisted amount [°] | Difference in twisted amount between 980-1180 [°] | |
| 1-1 | 90 | 115 | 980 MPa | 0.019 | 0.039 | 99.6 | 98.1 | 2.6 | 0.4 | 0.012 | 0.018 | 110.3 | 109.8 | -0.7 | -0.3 | Present Invention |
| 1-2 | 90 | 115 | 1180 MPa | 0.019 | 0.041 | 101.3 | 100.3 | 2.9 | | 0.012 | 0.018 | 109.6 | 109.8 | -1.0 | | Present Invention |
| 1-3 | 95 | 115 | 980 MPa | 0.016 | 0.026 | 105.3 | 104.0 | 1.3 | 1.7 | 0.010 | 0.017 | 110.7 | 110.4 | -0.1 | 0.1 | Present Invention |
| 1-4 | 95 | 115 | 1180 MPa | 0.015 | 0.025 | 106.7 | 105.1 | 3.0 | | 0.010 | 0.017 | 110.4 | 111.0 | 0.0 | | Present Invention |
| 1-5 | 115 | 115 | 980 MPa | 0.007 | 0.015 | 124.1 | 123.2 | 2.0 | 1.6 | 0.007 | 0.016 | 122.2 | 122.1 | 2.0 | 1.6 | Comp. Ex. |
| 1-6 | 115 | 115 | 1180 MPa | 0.007 | 0.014 | 125.4 | 124.4 | 3.6 | | 0.006 | 0.013 | 123.5 | 123.2 | 3.6 | | Comp. Ex. |

<No. 1-5 and No. 1-6>

No. 1-5 and No. 1-6 of Table 1 are evaluations of the twisted amounts of the 980 MPa material and the 1180 MPa material in a case where the vertical wall angle θ1 in the first step 10A is 115°.

As found from No. 1-6, in the 1180 MPa material, the vertical wall angle after the spring back after the first step 10A, that is, the vertical wall angle θ1' of the intermediate component 4 is 120° or more. The vertical wall angle θ1' greatly exceeds the vertical wall angle θ0 of the target component shape 1: 110° and the vertical wall angle θ2 of the die set in the second step 10B: 115°. In addition, each of the twisted amounts after the spring back in the first step 10A and the second step 10B is great as 3.6°.

In addition, as found from No. 1-5, even in the 980 MPa material, the vertical wall angle after the spring back after the first step 10A, that is, the vertical wall angle θ1' of the intermediate component 4 is 120° or more. The vertical wall angle θ1' greatly exceeds the vertical wall angle θ0 of the target component shape 1: 110° and the vertical wall angle θ2 of the die set in the second step 10B: 115°. In addition, each of the twisted amounts after the spring back in the first step 10A and the second step 10B is 2.0°.

Then, from No. 1-5 and No. 1-6, the dimensional accuracy fluctuation between the material strengths was 1.6°.

Further, with respect to the vertical wall angle θ2 of the die set in the second step 10B: 115°, the vertical wall angle after the spring back in the second step 10B of the 1180 MPa material of No. 1-6 was about 123°. That is, a great spring back occurs.

In addition, in the 980 MPa material of No. 1-5, the vertical wall angle after the spring back in the second step 10B was 122°. From this, it is found that the dimensional accuracy fluctuation of 1° or more occurred between No. 1-5 and No. 1-6.

<No. 1-3 and No. 1-4>

No. 1-3 and No. 1-4 are results of the 980 MPa material and the 1180 MPa material in a case where the vertical wall angle θ1 in the first step 10A is 95°.

As found from No. 1-4, in the 1180 MPa material, the vertical wall angle θ1' after the spring back after the first step 10A was about 105°. The vertical wall angle θ1' was an angle smaller than the vertical wall angle θ0 of the target component shape 1: 110° and the vertical wall angle θ2 of the die set in the second step 10B: 115°. In addition, the twisted amount after the spring back in the second step 10B was significantly reduced to 0.0°.

Further, as found from No. 1-3, even in the 980 MPa material, the twisted amount after the spring back in the second step 10B was significantly reduced to -0.1°. In addition, the dimensional accuracy fluctuation between the material strengths was also reduced to 0.1°.

In addition, the vertical wall angle was also as follows with respect to the vertical wall angle θ2 of the die set in the second step 10B: 115°. That is, in both the 1180 MPa material and the 980 MPa material, the vertical wall angle was about 110° after the spring back in the second step 10B, and the spring back amount was reduced. In addition, a difference between the 1180 MPa material of No. 1-4 and the 980 MPa material of No. 1-3 was reduced to about 0.5°.

<No. 1-1 and No. 1-2>

No. 1-1 and No. 1-2 show results of the 980 MPa material and the 1180 MPa material in a case where the vertical wall angle θ1 in the first step 10A is 90°.

As found from No. 1-2, in the 1180 MPa material, the vertical wall angle θ1' after the spring back in the first step 10A was about 100°. The vertical wall angle θ1' was an angle smaller than the vertical wall angle θ0 of the target component shape 1: 110° and the vertical wall angle θ2 of the die set in the second step 10B: 115°.

In addition, the twisted amount after the spring back in the second step 10B was -1.0°, and the twisting occurred in the opposite direction.

Further, as found from No. 1-1, even in the 980 MPa material, the twisted amount after the spring back in the second step 10B was -0.7°, and the twisting occurred in the opposite direction. However, the twisted amount was reduced compared to the twisted amount in the typical method, and the dimensional accuracy fluctuation between the material strengths was also reduced to 0.3°. From this, it is found that, in a case where the vertical wall angle θ1 in the first step 10A is excessively reduced, the stress is excessively reversed and the twisting is performed in the opposite direction.

From the above, as in No. 1-3 and No. 1-4, by performing the forming with the vertical wall angle θ1 of the die set in the first step 10A: 95° and the vertical wall angle θ2 of the die set in the second step 10B: 115°, the twisted amount, an angle change amount of the vertical wall, and the dimensional accuracy fluctuation thereof were significantly reduced. In addition, the vertical wall angle after the spring back in the second step 10B under this condition was about 110°, which was reduced to be less than the vertical wall angle θ2 of the die set in the second step 10B.

From this, it was found that, in a case where the vertical wall angle after the spring back in the second step 10B is set as the target component shape 1, it is necessary to design the vertical wall angle $\theta1$ of the die set in the first step 10A to be smaller than the target component shape 1. Further, it was found that it is necessary to design the vertical wall angle $\theta2$ of the die set in the second step 10B to be equal to or greater than the vertical wall angle $\theta0$ of the target component shape 1.

(Second Example)

In a second example, the vertical wall angle $\theta2$ of the die set in the second step 10B was fixed to 110°. The evaluation in a case where the vertical wall angle $\theta1$ of the die set in the first step 10A is set by selecting from 90°, 92°, 95°, and 110° is shown.

In the second example, the vertical wall angle $\theta0$ of the target component shape 1 was set to 106°.

The evaluation results of the second example are shown in Table 2.

[Table 2]

| No. | Vertical wall angle θ1 of die set in first step [°] | Vertical wall angle θ2 of die set in second step [°] | Material | Strain at press bottom dead center of first step | | After spring back of first step | | | | Strain at press bottom dead center of second step | | After spring back of second step | | | | Note |
|---|---|---|---|---|---|---|---|---|---|---|---|---|---|---|---|---|
| | | | | Convex side strain \|ε1\| | Concave side strain \|ε1'\| | Concave side vertical wall angle θ1' in top view [°] | Convex side vertical wall angle θ1' in top view [°] | Twisted amount [°] | Difference in twisted amount between 980-1180 [°] | Convex side strain \|ε2\| | Concave side strain \|ε2'\| | Concave side vertical wall angle θ2' in top view [°] | Convex side vertical wall angle θ2' in top view [°] | Twisted amount [°] | Difference in twisted amount between 980-1180 [°] | |
| 2-1 | 90 | 110 | 980 MPa | 0.019 | 0.042 | 99.7 | 98.1 | 2.4 | 0.4 | 0.013 | 0.019 | 106.1 | 106.7 | -0.4 | -0.5 | Present Invention |
| 2-2 | 90 | 110 | 1180 MPa | 0.019 | 0.040 | 101.3 | 99.9 | 2.8 | | 0.013 | 0.020 | 106.3 | 106.9 | -0.9 | | Present Invention |
| 2-3 | 92 | 110 | 980 MPa | 0.017 | 0.038 | 101.4 | 100.5 | 2.0 | 1.8 | 0.012 | 0.019 | 106.2 | 106.7 | 0.0 | 0.1 | Present Invention |
| 2-4 | 92 | 110 | 1180 MPa | 0.016 | 0.038 | 102.6 | 101.5 | 3.8 | | 0.012 | 0.020 | 105.5 | 107.5 | 0.1 | | Present Invention |
| 2-5 | 95 | 110 | 980 MPa | 0.016 | 0.025 | 104.7 | 103.9 | 1.2 | 1.7 | 0.011 | 0.017 | 106.6 | 107.8 | 0.2 | 0.8 | Present Invention |
| 2-6 | 95 | 110 | 1180 MPa | 0.015 | 0.026 | 105.9 | 105.0 | 2.9 | | 0.011 | 0.018 | 107.1 | 108.2 | 1.0 | | Present Invention |
| 2-7 | 110 | 110 | 980 MPa | 0.009 | 0.017 | 119.4 | 118.0 | 2.3 | 1.7 | 0.008 | 0.016 | 117.8 | 116.6 | 2.4 | 1.5 | Comp. Ex. |
| 2-8 | 110 | 110 | 1180 MPa | 0.008 | 0.016 | 120.4 | 119.3 | 4.0 | | 0.008 | 0.016 | 118.9 | 117.6 | 3.9 | | Comp. Ex. |

<No. 2-7 and No. 2-8>

No. 2-7 and No. 2-8 are results of the twisted amounts of the 980 MPa material and the 1180 MPa material in a case where the vertical wall angle θ1 in the first step 10A is 110°.

As found from No. 2-8, in the 1180 MPa material, the vertical wall angle θ1' after the spring back in the first step 10A was about 120°. The vertical wall angle θ1' greatly exceeds the vertical wall angle θ0 of the target component shape 1: 106° and the vertical wall angle θ2 of the die set in the second step 10B: 110°. In addition, the twisted amounts after the spring back in the first step 10A and the second step 10B are great as 4.0° and 3.9°, respectively.

Further, as found from No. 2-7, in the 980 MPa material, the twisted amounts after the spring back in the first step 10A and the second step 10B were 2.3° and 2.4°, respectively. Therefore, the dimensional accuracy fluctuation between the material strengths was 1.5° after the second step 10B.

Further, with respect to the vertical wall angle θ2 of the die set in the second step 10B: 110°, the vertical wall angle after the spring back in the second step 10B of the 1180 MPa material of No. 2-8 was about 118°. Accordingly, a great spring back occurs.

In addition, in the 980 MPa material of No. 2-7, the vertical wall angle after the spring back in the second step 10B was about 117°. As a result, the dimensional accuracy fluctuation of 1° or more occurred.

<No. 2-5 and No. 2-6>

No. 2-5 and No. 2-6 show results of the 980 MPa material and the 1180 MPa material in a case where the vertical wall angle θ1 in the first step 10A is 95°.

As found from No. 2-6, in the 1180 MPa material, the vertical wall angle θ1' after the spring back in the first step 10A was about 105°. This angle was an angle smaller than 110° of the die set in the second step 10B. In addition, the twisted amount after the spring back in the second step 10B was reduced to 1.0°.

Further, as found from No. 2-5, even in the 980 MPa material, the twisted amount after the spring back in the second step 10B was reduced to 0.2°, and the dimensional accuracy fluctuation between the material strengths was also reduced to 0.8°.

Also regarding the vertical wall angle, with respect to the vertical wall angle θ2 of the die set in the second step 10B of 110°, the vertical wall angle after the spring back in the second step 10B of the 1180 MPa material was about 107°, and the spring back amount was reduced.

In addition, a difference between the 1180 MPa material of No. 2-6 and the 980 MPa material of No. 2-5 was reduced to about 0.5°.

<No. 2-3 and No. 2-4>

No. 2-3 and No. 2-4 show results of the 980 MPa material and the 1180 MPa material in a case where the vertical wall angle θ1 in the first step 10A is 92°.

As found from No. 2-4, in the 1180 MPa material, the vertical wall angle θ1' after the spring back in the first step 10A was about 102°. The vertical wall angle θ1' was an angle smaller than the vertical wall angle θ0 of the target component shape 1: 106° and the vertical wall angle θ2 of the die set in the second step 10B: 110°. In addition, the twisted amount after the spring back in the second step 10B was significantly reduced to 0.1°.

As found from No. 2-3, even in the 980 MPa material, the twisted amount after the spring back in the second step 10B was significantly reduced to 0.0°.

Accordingly, the dimensional accuracy fluctuation between the material strengths was also reduced to 0.1°.

Also regarding the vertical wall angle, with respect to the vertical wall angle θ2 of the die set in the second step 10B of 110°, the vertical wall angle after the spring back in the second step 10B of the 1180 MPa material was about 106°, and the spring back amount was reduced.

In addition, a difference between the 1180 MPa material of No. 2-4 and the 980 MPa material of No. 2-3 was reduced to about 0.7°.

<No. 2-1 and No. 2-2>

No. 2-1 and No. 2-2 show results of the 980 MPa material and the 1180 MPa material in a case where the vertical wall angle θ1 in the first step 10A is 90°.

As found from No. 2-2, in the 1180 MPa material, the vertical wall angle θ1' after the spring back in the first step 10A was about 100°. The vertical wall angle θ1' was an angle smaller than the vertical wall angle θ0 of the target component shape 1: 106° and the vertical wall angle θ2 of the die set in the second step 10B: 110°. In addition, the twisted amount after the spring back in the second step 10B was -0.9°, and the twisting occurred in the opposite direction.

Further, as found from No. 2-1, even in the 980 MPa material, the twisted amount after the spring back in the second step 10B was -0.4°, and the twisting occurred in the opposite direction. However, the twisted amount was reduced compared to the twisted amount in the typical method, and the dimensional accuracy fluctuation between the material strengths was also reduced to 0.5°.

From this, it is found that, in a case where the vertical wall angle θ1 in the first step 10A is excessively reduced, the stress is excessively reversed and the twisting is performed in the opposite direction.

From the above, by performing the forming with the vertical wall angle θ1 of the die set in the first step 10A of 92° and the vertical wall angle θ2 of the die set in the second step 10B of 110°, the twisted amount, an angle change amount of the vertical wall portion, and the dimensional accuracy fluctuation thereof were significantly reduced. In addition, the vertical wall angle after the spring back in the second step 10B under this condition was about 106°, which was reduced to be less than the vertical wall angle θ2 of the die set in the second step 10B.

From this, it was found that, in a case where the vertical wall angle after the spring back in the second step 10B is set as the target component shape 1, it is necessary to design as follows. That is, it is necessary to design the vertical wall angle θ1 of the die set in the first step 10A to be smaller than the target component shape 1 and to design the vertical wall angle θ2 of the die set in the second step 10B to be an angle equal to or greater than the vertical wall angle of the product.

(Third Example)

In a third example, the vertical wall angle θ2 of the die set in the second step 10B was fixed to 105°. The result in a case where the vertical wall angle θ1 of the die set in the first step 10A is set by selecting from 90°, 95°, 100°, and 105° is shown.

In the third example, the vertical wall angle θ0 of the target component shape 1 was set to 103°.

The evaluation results of the third example are shown in Table 3.

[Table 3]

| No. | Vertical wall angle θ1 of die set in first step [°] | Vertical wall angle θ2 of die set in second step [°] | Material | Strain at press bottom dead center of first step | | After spring back of first step | | | | Strain at press bottom dead center of second step | | After spring back of second step | | | | Note |
|---|---|---|---|---|---|---|---|---|---|---|---|---|---|---|---|---|
| | | | | Convex side strain \|ε1\| | Concave side strain \|ε1'\| | Concave side vertical wall angle θ1' in top view [°] | Convex side vertical wall angle θ1' in top view [°] | Twisted amount [°] | Difference in twisted amount between 980-1180 [°] | Convex side strain \|ε2\| | Concave side strain \|ε2'\| | Concave side vertical wall angle θ2' in top view [°] | Convex side vertical wall angle θ2' in top view [°] | Twisted amount [°] | Difference in twisted amount between 980-1180 [°] | |
| 3-1 | 90 | 105 | 980 MPa | 0.018 | 0.039 | 99.6 | 98.1 | 2.5 | 0.4 | 0.015 | 0.020 | 102.5 | 103.5 | 0.0 | -0.1 | Present Invention |
| 3-2 | 90 | 105 | 1180 MPa | 0.018 | 0.046 | 101.5 | 99.9 | 2.9 | | 0.014 | 0.020 | 102.8 | 103.8 | -0.1 | | Present Invention |
| 3-3 | 95 | 105 | 980 MPa | 0.015 | 0.022 | 105.3 | 104.0 | 1.2 | 1.8 | 0.013 | 0.020 | 105.0 | 105.3 | 0.9 | 1.7 | Comp. Ex. |
| 3-4 | 95 | 105 | 1180 MPa | 0.015 | 0.022 | 106.7 | 105.0 | 3.0 | | 0.013 | 0.020 | 106.1 | 106.0 | 2.6 | | Comp. Ex. |
| 3-5 | 100 | 105 | 980 MPa | 0.012 | 0.020 | 109.4 | 108.4 | 2.3 | 1.5 | 0.012 | 0.019 | 108.9 | 108.4 | 2.5 | 1.4 | Comp. Ex. |
| 3-6 | 100 | 105 | 1180 MPa | 0.012 | 0.020 | 110.9 | 109.8 | 3.8 | | 0.011 | 0.019 | 110.6 | 109.5 | 3.9 | | Comp. Ex. |
| 3-7 | 105 | 105 | 980 MPa | 0.011 | 0.018 | 114.3 | 113.7 | 2.5 | 1.6 | 0.009 | 0.017 | 113.1 | 111.9 | 2.3 | 1.4 | Comp. Ex. |
| 3-8 | 105 | 105 | 1180 MPa | 0.010 | 0.018 | 115.4 | 114.4 | 4.1 | | 0.009 | 0.017 | 113.9 | 113.3 | 3.7 | | Comp. Ex. |

<No. 3-7 and No. 3-8>

No. 3-7 and No. 3-8 are results of the twisted amounts of the 980 MPa material and the 1180 MPa material in a case where the vertical wall angle in the first step 10A is 105°.

As found from No. 3-8, in the 1180 MPa material, the vertical wall angle $\theta1'$ after the spring back in the first step 10A is about 115°. The vertical wall angle $\theta1'$ greatly exceeds the vertical wall angle $\theta0$ of the target component shape 1: 103° and the vertical wall angle $\theta2$ of the die set in the second step 10B: 105°. In addition, the twisted amounts after the spring back in the first step 10A and the second step 10B are great as 4.1° and 3.7°, respectively.

Further, as found from No. 3-7, in the 980 MPa material, the twisted amounts after the spring back in the first step 10A and the second step 10B were 2.5° and 2.3°, respectively.

Therefore, the dimensional accuracy fluctuation between the material strengths was 1.4° after the second step 10B.

Further, with respect to the vertical wall angle $\theta2$ of the die set in the second step 10B: 105°, the vertical wall angle after the spring back in the second step 10B of the 1180 MPa material of No. 3-8 is about 113°. A great spring back occurs. In addition, the value for the 980 MPa material of No. 3-7 was about 112°.

Therefore, the dimensional accuracy fluctuation of 1° or more occurred between the 1180 MPa material of No. 3-8 and the 980 MPa material of No. 3-7.

<No. 3-5, No. 3-6, No. 3-3, and No. 3-4>

No. 3-5 and No. 3-6 show results of the 980 MPa material and the 1180 MPa material in a case where the vertical wall angle $\theta1$ in the first step 10A is 100°.

No. 3-3 and No. 3-4 show results of the 980 MPa material and the 1180 MPa material in a case where the vertical wall angle $\theta1$ in the first step 10A is 95°.

Under any condition, the vertical wall angle $\theta1'$ after the spring back in the first step 10A was an angle greater than the vertical wall angle $\theta0$ of the target component shape 1: 103°. In addition, no significant reduction was seen in the dimensional accuracy fluctuation of the twisted amount after the spring back in the second step 10B.

<No. 3-1 and No. 3-2>

No. 3-1 and No. 3-2 show results of the 980 MPa material and the 1180 MPa material in a case where the vertical wall angle $\theta1$ in the first step 10A is 90°.

As found from No. 3-2, in the 1180 MPa material, the vertical wall angle $\theta'$ after the spring back in the first step 10A was about 101°. The vertical wall angle $\theta'$ was an angle smaller than the vertical wall angle $\theta0$ of the target component shape 1: 103° and the vertical wall angle $\theta2$ of the die set in the second step 10B: 105°. In addition, the twisted amount after the spring back in the second step 10B was significantly reduced to -0.1°.

Further, as found from No. 3-1, even in the 980 MPa material, the twisted amount after the spring back in the second step 10B was significantly reduced to 0.0°.

Therefore, the dimensional accuracy fluctuation between the material strengths was also reduced to 0.1° between the 980 MPa material of No. 3-1 and the 1180 MPa material of No. 3-2.

In addition, also regarding the vertical wall angle, with respect to the vertical wall angle $\theta2$ of the die set in the second step 10B: 105°, the vertical wall angle after the spring back in the second step 10B of the 1180 MPa material was about 103°, and the spring back amount was reduced.

In addition, a difference between the 1180 MPa material of No. 3-2 and the 980 MPa material of No. 3-1 was reduced to about 0.3°.

From the above, it was found that the forming may be performed with the vertical wall angle $\theta1$ of the die set in the first step 10A: 90° and the vertical wall angle $\theta2$ of the die set in the second step 10B: 105°. In this case, the twisted amount, the angle change amount of the vertical wall portion, and the dimensional accuracy fluctuation thereof were significantly reduced. In addition, the vertical wall angle after the spring back in the second step 10B under this condition was about 103°, which was reduced to be less than the vertical wall angle $\theta2$ of the die set in the second step 10B.

From this, it was found that, in a case where the vertical wall angle after the spring back in the second step 10B is set as the target component shape 1, it is necessary to design as follows. That is, it is necessary to design the vertical wall angle $\theta1$ of the die set in the first step 10A to be smaller than the vertical wall angle $\theta0$ of the target component shape 1 and to design the vertical wall angle $\theta2$ of the die set in the second step 10B to be equal to or greater than the vertical wall angle $\theta0$ of the target component shape 1.

In addition, in the same manner for the 590 MPa material and the 780 MPa material, in a case where the vertical wall angle after the spring back in the second step 10B is set to the target component shape 1 based on the present invention, the following was confirmed. That is, the vertical wall angle $\theta1$ of the die set in the first step 10A is designed to be smaller than the vertical wall angle θ0 of the target component shape 1, and the vertical wall angle θ2 of the die set in the second step 10B is designed to be equal to or greater than the vertical wall angle θ0 of the target component shape 1. As a result, it was confirmed that the vertical wall angle θ0 of the target component shape 1 was obtained and the twisting was suppressed. Further, it was confirmed that the dimensional accuracy fluctuation was significantly reduced in the 590 MPa material and the 780 MPa material.

Since it is considered that the relationship between the spring back and the change amount of the vertical wall angle after the first step 10A changes depending on a steel type and a shape thereof, it is necessary to design a shape suitable for each.

<Examples with respect to Embodiment 2>

In the present example, the target component shape 1 was set to be a vertically bent shape that is bent on the top plate portion side along the longitudinal direction illustrated in FIG. 21. In this case, the metal sheet 3 (blank material) used for the press forming was three types of steel sheet having tensile strengths of about 590 MPa, about 980 MPa, and about 1180 MPa. This is because a plurality of material strengths are evaluated in order to also compare the dimensional accuracy fluctuation.

In addition, the plate thickness t of the metal sheet used for press forming was set to 1.4 mm. The dimensions of a reference product shape were set as follows: the width of the top plate portion was set to 60 mm, the height of the vertical wall portion was set to 30 mm, the vertical wall angle formed by the top plate portion and the vertical wall portion was set to 130°, the maximum distance between the right and left flange portions was set to 150 mm, the length of the product in the longitudinal direction was set to 400 mm, and the top plate portion radius of curvature of the bending portion was set to 1600 mm. The angle of 130° formed by the top plate portion and the vertical wall portion and the top plate portion radius of curvature of 1600 mm of the bending portion are reference values and are not necessarily target values after the press forming.

The press forming analysis and the spring back analysis in a case where the vertical wall angle in the first step is reduced were performed, and the radius of curvature and the vertical wall angle before and after the spring back were measured.

The radius of curvature of each die set in a side view in the first step 10A and the second step 10B of the present example was set to R1600 [mm] . In addition, the FEM analysis was performed by changing the vertical wall angle θ1 of the die set in the first step 10A in a range of 90° to 130° and unifying the vertical wall angle θ2 of the die set in the second step 10B to 130°. The evaluation results are shown in Table 4. The value of the camber back amount after the spring back in the second step 10B was within ± 2.0 mm, which was evaluated as "Pass". In addition, a case where the difference in height between the three steel types was 1.0 mm or less was evaluated as "Pass".

In Table 4, the "die set vertical wall angle" indicates the "vertical wall angle of the die set ".

[Table 4]

| No. | Material | Die set R in first step | Vertical wall angle of die set in first step | Die set R in second step | Vertical wall angle of die set in second step | Average strain εt1 (absolute value) of top plate at bottom dead center in first step | Average strain εb1 (absolute value) of flange at bottom dead center in first step | Top plate R after SB in first step | Vertical wall angle after SB in first step | Average strain εt2 (absolute value) of top plate at bottom dead center in second step | Average strain εb2 (absolute value) of flange at bottom dead center in second step | Top plate R after SB in second step | Vertical wall angle after SB in second step | εt2/εt1 | εb2/εb1 | Maximum fluctuation amount of top plate R after SB in second step | Height deviation amount from product after SB in second step | Maximum fluctuation amount of height after SB in second step | Note |
|---|---|---|---|---|---|---|---|---|---|---|---|---|---|---|---|---|---|---|---|
| 4-1 | 590 | 1600 | 130° | 1600 | 130° | 0.0024 | 0.0092 | 1734 | 133.5 | 0.0026 | 0.0090 | 1743 | 133 | 1.06 | 0.97 | | 1.2 | | Comp. Ex. |
| 42 | 980 | 1600 | 130° | 1600 | 130° | 0.0039 | 0.0089 | 1857 | 136.3 | 0.0042 | 0.0089 | 1871 | 135.4 | 1.10 | 1.01 | 221 | 2.1 | 1.22 | Comp. Ex. |
| 4-3 | 1180 | 1600 | 130° | 1600 | 130° | 0.0039 | 0.0087 | 1950 | 138.3 | 0.0040 | 0.0086 | 1964 | 138.2 | 1.04 | 0.99 | | 2.42 | | Comp. Ex. |
| 4-4 | 590 | 1600 | 100° | 1600 | 130° | 0.0018 | 0.0148 | 1643 | 105 | 0.0006 | 0.0088 | 1509 | 128.9 | 0.31 | 0.59 | | -0.76 | | Present Invention |
| 4-5 | 980 | 1600 | 100° | 1600 | 130° | 0.0030 | 0.0147 | 1614 | 110.8 | 0.0017 | 0.0094 | 1555 | 127.4 | 0.56 | 0.64 | 102 | -0.32 | 0.93 | Present Invention |
| 4-6 | 1180 | 1600 | 100° | 1600 | 130° | 0.0030 | 0.0145 | 1667 | 111.7 | 0.0018 | 0.0095 | 1611 | 127.6 | 0.59 | 0.66 | | 0.17 | | Present Invention |
| 4-7 | 590 | 1600 | 95° | 1600 | 130° | 0.0015 | 0.0156 | 1598 | 99 | 0.0004 | 0.0095 | 1454 | 129.3 | 0.28 | 0.61 | | -1.23 | | Present Invention |
| 4-8 | 980 | 1600 | 95° | 1600 | 130° | 0.0025 | 0.0156 | 1568 | 104.2 | 0.0012 | 0.0091 | 1468 | 127.4 | 0.48 | 0.59 | 52 | -1.1 | 0.46 | Present Invention |
| 4-9 | 1180 | 1600 | 95° | 1600 | 130° | 0.0027 | 0.0151 | 1602 | 105.8 | 0.0015 | 0.0094 | 1506 | 127 | 0.54 | 0.62 | | -0.77 | | Present Invention |
| 4-10 | 590 | 1600 | 90° | 1600 | 130° | 0.0012 | 0.0171 | 1641 | 92.9 | 0.0001 | 0.0067 | 1455 | 128.3 | 0.12 | 0.39 | | -1.22 | | Present Invention |
| 4-11 | 980 | 1600 | 90° | 1600 | 130° | 0.0019 | 0.0179 | 1555 | 100.7 | 0.0007 | 0.0089 | 1381 | 126.2 | 0.39 | 0.50 | 74 | -1.98 | 0.76 | Present Invention |
| 4-12 | 1180 | 1600 | 90° | 1600 | 130° | 0.0022 | 0.0166 | 1559 | 102.1 | 0.0009 | 0.0085 | 1402 | 125.8 | 0.39 | 0.51 | | -1.77 | | Present Invention |

<Nos. 4-1 to 4-3>

Nos. 4-1 to 4-3 are cases where the vertical wall angle θ1 of the die set in the first step is 130°. In addition, as the steel sheet, the 590 MPa material, the 980 MPa material, and the 1180 MPa material were used. In addition, Nos. 4-1 to 4-3 show the results of obtaining the relationship between an average strain of each of the top plate portion and the flange portion at the bottom dead center of forming with each material, the radius of curvature of the top plate portion in the longitudinal direction after the spring back, and the vertical wall angle. Here, the "radius of curvature of the top plate portion in the longitudinal direction" is also referred to as a "top plate R".

In Nos. 4-1 to 4-3, the vertical wall angle θ1 after the spring back in the first step 10A of each material is an angle greater than 130°, which is the vertical wall angle θ2 of the die set in the second step 10B. In a case of the 1180 MPa material, the vertical wall angle θ1' after the spring back in the first step 10A is 138.3°. In addition, the top plate R after the spring back in the second step 10B with the 1180 MPa material was R1964 [mm]. Then, the maximum fluctuation amount ΔR of the 590 MPa material to the 1180 MPa material was R221 mm. As described above, the difference in height between the steel types was great as 1.22 mm, and the condition that the desired difference in height was 1 mm or less was not satisfied.

<Nos. 4-4 to 4-6>

In contrast, Nos. 4-4 to 4-6 are cases where the vertical wall angle θ1 of the die set in the first step 10A is 100°. In addition, Nos. 4-4 to 4-6 show the results of obtaining the relationship between an average strain of each of the top plate portion and the flange portion at the bottom dead center of forming with each material, the top plate R after the spring back, and the vertical wall angle.

The vertical wall angle θ1' after the spring back in the first step 10A of each material is an angle smaller than 130°, which is the vertical wall angle θ2 of the die set in the second step 10B. For example, in a case of the 1180 MPa material, the vertical wall angle θ1' after the spring back in the first step 10A is 111.7°. In addition, the top plate R after the spring back in the second step 10B with the 1180 MPa material was R1611 [mm]. Then, the maximum fluctuation amount ΔR of the 590 MPa material to the 1180 MPa material was R102 mm. The difference in height between the steel types is 0.93 mm, which satisfies the condition of 1 mm or less which is desired. In addition, the vertical wall angle after the spring back in the second step 10B was 127.6° for the 1180 MPa material. In addition, the spring back amount from 130° of the vertical wall angle θ2 of the die set in the second step 10B and the fluctuation amount of the 590 MPa material to 1180 MPa material were reduced compared to Comparative Examples Nos. 4-1 to 4-3.

<Nos. 4-7 to 4-9>

Next, Nos. 4-7 to 4-9 are cases where the vertical wall angle θ1 of the die set in the first step 10A is 95°. Nos. 4-7 to 4-9 show the results of obtaining the relationship between an average strain of each of the top plate portion and the flange portion at the bottom dead center of forming with each material, the top plate R after the spring back, and the vertical wall angle.

The vertical wall angle θ1' after the spring back in the first step 10A of each material is an angle smaller than 130°, which is the vertical wall angle θ2 of the die set in the second step 10B. For example, in a case of the 1180 MPa material, the vertical wall angle θ' after the spring back in the first step 10A is 105.8°. In addition, the top plate R after the spring back in the second step 10B with the 1180 MPa material was R1506 [mm]. Then, the maximum fluctuation amount ΔR of the 590 MPa material to the 1180 MPa material was R52 mm. The difference in height between the steel types is 0.46 mm, which satisfies the condition of 1 mm or less which is desired. In addition, the vertical wall angle after the spring back in the second step 10B was 127° for the 1180 MPa material. In Nos. 4-7 to 4-9, the spring back amount from 130° of the vertical wall angle θ2 of the die set in the second step 10B and the fluctuation amount of the 590 MPa material to 1180 MPa material were reduced compared to Comparative Examples Nos. 4-1 to 4-3.

<Nos. 4-10 to 4-12>

Next, Nos. 4-10 to 4-12 are cases where the vertical wall angle θ1 of the die set in the first step 10A is 90°. Nos. 4-10 to 4-12 show the results of obtaining the relationship between an average strain of each of the top plate portion and the flange portion at the bottom dead center of forming with each material, the top plate R after the spring back, and the vertical wall angle.

The vertical wall angle θ1' after the spring back in the first step 10A of each material is an angle smaller than 130°, which is the vertical wall angle θ2 of the die set in the second step 10B. For example, in a case of the 1180 MPa material, the vertical wall angle θ1' after the spring back in the first step 10A is 102.1°. In addition, the top plate R after the spring back in the second step 10B with the 1180 MPa material was R1402 [mm]. Then, the maximum fluctuation amount ΔR of the 590 MPa material to the 1180 MPa material was R74 mm. The difference in height between the steel types is 0.76 mm, which satisfies the condition of 1 mm or less which is desired. In addition, the vertical wall angle after the spring back in the second step 10B was 125.8° for the 1180 MPa material. In Nos. 4-10 to 4-12, the spring back amount from 130° of the vertical wall angle $\theta2$ of the die set in the second step 10B and the fluctuation amount of the 590 MPa material to 1180 MPa material were reduced compared to Comparative Examples Nos. 4-1 to 4-3.

Reference Signs List

1: target component shape
1A: top plate portion
1B: vertical wall portion
1C: flange portion
2: bending portion
3: metal sheet (blank material)
4: intermediate component
10A: first step
10B: second step
11: die in first step
12: punch in first step
13: pad in first step
14: die in second step
15: punch in second step
16: pad in second step
$\theta0$: vertical wall angle of target component shape
$\theta1$: first vertical wall angle (vertical wall angle of die set in first step)
$\theta1'$: vertical wall angle of intermediate component
$\theta2$: second vertical wall angle (vertical wall angle of die set in second step)

**Claims**

1. A method for manufacturing a press formed article for forming a metal sheet into a target component shape having a cross section including a top plate portion and a vertical wall portion connected to an end portion of the top plate portion in a width direction and extends in a direction different from the top plate portion, and having one or two or more bending portions which are bent along a longitudinal direction which is a direction intersecting the cross section, the method comprising:

   in a case where an angle between the top plate portion and the vertical wall portion of the cross section is defined as a vertical wall angle,
   a first step of press-forming the metal sheet into an intermediate component including the top plate portion and the vertical wall portion using a die set having a forming surface with a first vertical wall angle smaller than a vertical wall angle of the target component shape at a position of the bending portion; and
   a second step of press-forming the intermediate component with a die set having a forming surface with a second vertical wall angle equal to or greater than the vertical wall angle of the target component shape at the position of the bending portion,
   wherein, at the position of the bending portion, for a vertical wall angle of the intermediate component after release in the first step, the first vertical wall angle is set to be an angle smaller than the vertical wall angle of the target component shape.

2. The method for manufacturing a press formed article according to claim 1, wherein the bending portion has a curve that is concave or convex toward a side of the vertical wall portion.

3. The method for manufacturing a press formed article according to claim 2, wherein,

   in a case where the vertical wall angle of the target component shape is defined as $\theta0$, the first vertical wall angle is defined as $\theta1$, the vertical wall angle of the intermediate component after forming and release in the first step is defined as θ1', and the second vertical wall angle is defined as θ2,
press forming is performed using a die set having a forming surface satisfying Expression (1) for the first vertical wall angle θ1 and the second vertical wall angle θ2,

$$\theta1 < \theta1' < \theta0 < \theta2 \quad ...(1).$$

4.  The method for manufacturing a press formed article according to claim 2 or 3, wherein,

in a case where the first vertical wall angle is defined as θ1 and the second vertical wall angle is defined as θ2, the first vertical wall angle θ1 and the second vertical wall angle θ2 are set to satisfy Expression (2),

$$0.7 \leq (\theta1/\theta2) \quad ...(2).$$

5.  The method for manufacturing a press formed article according to any one of claims 2 to 4, wherein,

in a case where the vertical wall angle of the target component shape is defined as θ0 and the first vertical wall angle is defined as θ1, the first vertical wall angle θ1 is set to be a value satisfying Expression (3),

$$0.75 \leq (\theta1/\theta0) \quad ...(3).$$

6.  The method for manufacturing a press formed article according to any one of claims 2 to 5, wherein,

in a case where the second vertical wall angle is defined as θ2 and the vertical wall angle of the intermediate component after forming and release in the first step is defined as θ1', the second vertical wall angle θ2 is set to be a value satisfying Expression (4),

$$0.8 \leq (\theta1'/\theta2) \quad ...(4).$$

7.  The method for manufacturing a press formed article according to any one of claims 2 to 6, wherein,

in a case where the vertical wall angle of the target component shape is defined as θ0 and the second vertical wall angle is defined as θ2, the second vertical wall angle θ2 is set to be a value satisfying Expression (5),

$$(\theta2/\theta0) < 1.05 \quad ...(5).$$

8.  The method for manufacturing a press formed article according to any one of claims 2 to 7, wherein,

in a case where the target component shape in which the bending portion is bent to be convex to a vertical wall portion side is targeted,
for a distribution of a strain in the longitudinal direction at a press bottom dead center in the press forming of the second step, at the position of the bending portion, an average value of strains in a lower half of a vertical wall of the vertical wall portion that is convex in a top view is defined as ε2, and
for a distribution of a strain in the longitudinal direction at a press bottom dead center in the press forming of the first step, at the position of the bending portion, an average value of strains in the lower half of the vertical wall of the vertical wall portion that is convex in the top view is defined as ε1, the first vertical wall angle and the second vertical wall angle are set to be values satisfying Expression (6),

$$0.4 \times |\varepsilon1| \leq |\varepsilon2| < 0.85 \times |\varepsilon1| \quad ...(6).$$

9.  The method for manufacturing a press formed article according to any one of claims 2 to 8, wherein,

in a case where the target component shape in which the bending portion is bent to be concave to a vertical wall portion side is targeted,

for a distribution of a strain in the longitudinal direction at a press bottom dead center in the press forming of the second step, at the position of the bending portion, an average value of strains in a lower half of a vertical wall of the vertical wall portion that is concave in a top view is defined as $\varepsilon2'$, and

for a distribution of a strain in the longitudinal direction at a press bottom dead center in the press forming of the first step, at the position of the bending portion, an average value of strains in the lower half of the vertical wall of the vertical wall portion that is concave in the top view is defined as $\varepsilon1'$,

the first vertical wall angle and the second vertical wall angle are set to be values satisfying Expression (7),

$$0.4 \times |\varepsilon1'| \leq |\varepsilon2'| < 0.85 \times |\varepsilon1'| \quad ...(7).$$

10. The method for manufacturing a press formed article according to claim 1, wherein the bending portion has a curve that is concave or convex toward a top plate portion side.

11. The method for manufacturing a press formed article according to claim 10, wherein,

in a case where the vertical wall angle of the target component shape is defined as $\theta0$, the first vertical wall angle is defined as $\theta1$, the vertical wall angle of the intermediate component after forming and release in the first step is defined as $\theta1'$, and the second vertical wall angle is defined as $\theta2$,

press forming is performed using a die set having a forming surface satisfying Expression (1) for the first vertical wall angle $\theta1$ and the second vertical wall angle $\theta2$,

$$\theta1 < \theta1' < \theta0 < \theta2 \quad ...(1).$$

12. The method for manufacturing a press formed article according to claim 10 or 11, wherein,

in a case where, for a distribution of a strain in the longitudinal direction at a press bottom dead center in the press forming of the second step, at the position of the bending portion, an absolute value of an average value of strains of the top plate portion is defined as $\varepsilon t2$, and

for a distribution of a strain in the longitudinal direction at a press bottom dead center in the press forming of the first step, at the position of the bending portion, an absolute value of an average value of strains of the top plate portion is defined as $\varepsilon t1$,

the first vertical wall angle and the second vertical wall angle are set to be values satisfying Expression (8),

$$0.4 \times \varepsilon t1 \leq \varepsilon t2 < 0.9 \times \varepsilon t1 \quad ...(8).$$

13. The method for manufacturing a press formed article according to any one of claims 10 to 12, wherein,

in a case where the cross section has a U-shape, or a hat shape having a flange portion,

for a distribution of a strain in the longitudinal direction at a press bottom dead center in the press forming of the second step, at the position of the bending portion, in a case where the cross section has the U-shape, an absolute value of an average value of strains in a lower half of the vertical wall portion is defined as $\varepsilon b2$, and in a case where the cross section has the hat shape having the flange portion, an absolute value of an average value of strains of the flange portion is defined as $\varepsilon b2$, and

for a distribution of a strain in the longitudinal direction at a press bottom dead center in the press forming of the first step, at the position of the bending portion, in a case where the cross section has the U-shape, an absolute value of an average value of strains in the lower half of the vertical wall portion is defined as $\varepsilon b1$, and in a case where the cross section has the hat shape having the flange portion, an absolute value of an average value of strains of the flange portion is defined as $\varepsilon b1$,

the first vertical wall angle and the second vertical wall angle are set to be values satisfying Expression (9),

$$0.4 \times \varepsilon b1 \leq \varepsilon b2 < 0.9 \times \varepsilon b1 \quad ...(9).$$

14. The method for manufacturing a press formed article according to any one of claims 1 to 13, wherein,

the die set used in the second step includes a die constituting one of an upper die and a lower die, and a punch constituting the other one of the upper die and the lower die, and

in the second step, the press forming is performed in a state where the top plate portion of the intermediate component is sandwiched by a top plate forming surface of the die and a pad which is extended from a top plate forming surface of the punch.

15. A method for designing a die set used in the method for manufacturing a press formed article according to any one of claims 1 to 9, wherein,

when designing a vertical wall angle of each die set in the first step and the second step,
first, CAE analysis or actual pressing is performed with the vertical wall angle of the die set in the first step being a value smaller than a vertical wall angle of a product, and a condition under which a vertical wall angle after spring back in the first step is smaller than the vertical wall angle of the product is found to set the first vertical wall angle, and
then, in the second step, CAE analysis or actual pressing is performed with a die shape having a forming surface of a vertical wall angle equal to or greater than the vertical wall angle of the target component shape, and a condition under which a component shape after spring back in the second step satisfies a tolerance of the vertical wall angle of the target component shape and twisting is found to set the second vertical wall angle.

16. A method for designing a die set used in the method for manufacturing a press formed article according to any one of claims 10 to 13, wherein,

when designing a vertical wall angle of each die set in the first step and the second step,
first, CAE analysis or actual pressing is performed with the vertical wall angle of the die set in the first step being a value smaller than a vertical wall angle of a product, and a condition under which a vertical wall angle after spring back in the first step is smaller than the vertical wall angle of the product is found to set the first vertical wall angle, and
then, in the second step, CAE analysis or actual pressing is performed with a die shape having a forming surface of a vertical wall angle equal to or greater than the vertical wall angle of the target component shape, and a condition under which a component shape after spring back in the second step satisfies a tolerance of the vertical wall angle of the target component shape is found to set the second vertical wall angle.

FIG. 1A

FIG. 1B

FIG. 1C

# FIG. 2

(METAL SHEET) ⎯⎯ 3

⬇

| FIRST STEP | ⎯ 10A

⬇

(INTERMEDIATE COMPONENT) ⎯⎯ 4

⬇

| SECOND STEP | ⎯ 10B

FIG. 3

FIG. 4

11Aa

θ1    θ1

11A

11

11Ab

12Aa    13    3

12Ab    θ1    θ1    12A

12

FIG. 5A

4A    16

4

15

FIG. 5B

14

16    4

15

# FIG. 6

FIG. 7

FIG. 8A

FIG. 8B

TWISTING

AFTER
SPRING BACK

BEFORE
SPRING BACK

FIG. 9A

6

CONVEX SIDE : COMPRESSIVE STRESS

LONGITUDINAL DIRECTION STRESS

500

−500

FIG. 9B

6

CONCAVE SIDE : TENSILE STRESS

FIG. 10

TARGET COMPONENT SHAPE

STRENGTH INCREASING MATERIAL
BOTTOM DEAD CENTER
STRENGTH DECREASING MATERIAL
BOTTOM DEAD CENTER

FORMING

STRESS σ

SPRING BACK

STRAIN ε

SPRING BACK AMOUNT (STRENGTH DECREASING MATERIAL)

SPRING BACK AMOUNT (STRENGTH INCREASING MATERIAL)

FIG. 11A

CONVEX SIDE : COMPRESSIVE STRESS

LONGITUDINAL
DIRECTION
STRESS

500

−500

FIG. 11B

CONCAVE SIDE : TENSILE STRESS

[θ1=95°]

FIG. 12A

CONVEX SIDE :
TENSILE STRESS

1

MATERIAL IS EXTENDED AND PULLED OUTWARD

LONGITUDINAL
DIRECTION
STRESS

500

−500

EP 4 650 078 A1

CONCAVE SIDE :
COMPRESSIVE STRESS

1

FIG. 12B

MATERIAL IS CONSTRUCTED INWARD

[θ0=115°]

FIG. 13

FIG. 14A

LONGITUDINAL
DIRECTION
STRAIN

0.05

-0.05

CONVEX SIDE :
COMPRESSIVE STRAIN

FIG. 14B

CONCAVE SIDE : TENSILE STRAIN

[ $\theta 1 = 95°$ ]

EP 4 650 078 A1

FIG. 15A

CONVEX SIDE :
COMPRESSIVE STRAIN DECREASE

1

LONGITUDINAL
DIRECTION
STRAIN

0.05

CONCAVE SIDE :
TENSILE STRAIN DECREASE

1

FIG. 15B

−0.05

[ θ0=115° ]

EP 4 650 078 A1

FIG. 16

# FIG. 17

FIG. 18

FIG. 19

FIG. 20

FIG. 21A

FIG. 21B

400

2

1A

1B

1C

R1600

1

FIG. 21C

60

1A

1C 1B

130°

1B 1C

30

150

1

FIG. 22

FIG. 23A

FIG. 23B

FIG. 24

AFTER SPRING BACK

DIFFERENCE IN
HEIGHT DEVIATION
AMOUNT FROM
PRODUCT

BEFORE SPRING BACK

6

FIG. 25

TOP PLATE PORTION: TENSILE STRESS

6

VERTICAL WALL PORTION :
COMPRESSIVE STRESS

LONGITUDINAL
DIRECTION
STRESS

500

−500

# FIG. 26

FIG. 27A

θ1    θ1

LINE LENGTH L1 OF VERTICAL WALL PORTION

FIG. 27B

θ2    θ2

LINE LENGTH L2 OF VERTICAL WALL PORTION

FIG. 28

4

LONGITUDINAL
DIRECTION
STRESS

500

−500

FIG. 29

TOP PLATE PORTION: TENSILE STRESS DECREASE

1

FLANGE PORTION :
TENSILE STRESS

LONGITUDINAL
DIRECTION
STRESS

500

−500

FIG. 30

FIG. 31

LONGITUDINAL
DIRECTION
STRAIN

FLANGE PORTION :
COMPRESSIVE STRAIN

0.04

−0.04

FIG. 32

4

FLANGE PORTION :
COMPRESSIVE STRAIN DECREASE

LONGITUDINAL
DIRECTION
STRAIN

0.04

−0.04

FIG. 33

SUITABLE RANGE OF
$\varepsilon t2/\varepsilon t1$

HEIGHT DEVIATION AMOUNT FROM PRODUCT (mm)

□ 590MPa
○ 980MPa
△ 1180MPa

$\varepsilon t2/\varepsilon t1$

TARGET RANGE OF
HEIGHT DEVIATION AMOUNT
FROM PRODUCT

# FIG. 34

## INTERNATIONAL SEARCH REPORT

| International application No. |
| --- |
| **PCT/JP2023/042940** |

| A. | CLASSIFICATION OF SUBJECT MATTER |
| --- | --- |

***B21D 22/26***(2006.01)i; ***B21D 5/01***(2006.01)i; ***B21D 22/00***(2006.01)i; ***B21D 22/20***(2006.01)i
FI:   B21D22/26 C; B21D5/01 D; B21D22/00; B21D22/20 E; B21D22/26 D

According to International Patent Classification (IPC) or to both national classification and IPC

| B. | FIELDS SEARCHED |
| --- | --- |

Minimum documentation searched (classification system followed by classification symbols)

B21D22/26; B21D5/01; B21D22/00; B21D22/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2020/235152 A1 (JFE STEEL CORPORATION) 26 November 2020 (2020-11-26) paragraphs [0014]-[0035], fig. 1-9 | 1-3, 10-11, 14 |
| A | | 4-9, 12-13, 15-16 |
| Y | JP 54-068765 A (HITACHI METALS LTD.) 02 June 1979 (1979-06-02) p. 2, upper right column, lines 17-19 | 1-3, 10-11, 14 |
| Y | JP 2019-025533 A (JFE STEEL CORPORATION) 21 February 2019 (2019-02-21) paragraphs [0012]-[0015], fig. 1-2 | 10-11, 14 |
| Y | WO 2015/098871 A1 (NIPPON STEEL & SUMITOMO METAL CORPORATION) 02 July 2015 (2015-07-02) paragraphs [0089]-[0093], fig. 29 | 14 |
| A | WO 2020/144995 A1 (JFE STEEL CORPORATION) 16 July 2020 (2020-07-16) entire text, all drawings | 1-16 |

☑ Further documents are listed in the continuation of Box C.     ☑ See patent family annex.

| | |
| --- | --- |
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **13 February 2024** | **20 February 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
|---|
| **PCT/JP2023/042940** |

**C. DOCUMENTS CONSIDERED TO BE RELEVANT**

| Category* | Citation of document, with indication, where appropriate, of the relevant passages | Relevant to claim No. |
|---|---|---|
| A | JP 2004-195535 A (PRESS KOGYO CO., LTD.) 15 July 2004 (2004-07-15)<br>entire text, all drawings | 1-16 |
| A | JP 5664810 B1 (JFE STEEL CORPORATION) 04 February 2015 (2015-02-04)<br>entire text, all drawings | 1-16 |
| A | JP 2011-206789 A (KABUSHIKI KAISHA KOBE SEIKO SHO) 20 October 2011<br>(2011-10-20)<br>entire text, all drawings | 1-16 |

Form PCT/ISA/210 (second sheet) (July 2022)

**INTERNATIONAL SEARCH REPORT**
Information on patent family members

| International application No. |
| PCT/JP2023/042940 |

| Patent document cited in search report | | | Publication date (day/month/year) | Patent family member(s) | | | Publication date (day/month/year) |
|---|---|---|---|---|---|---|---|
| WO | 2020/235152 | A1 | 26 November 2020 | US 2022/0212243 A1 paragraphs [0042]-[0091], fig. 1-9 JP 6760551 B1 EP 3974078 A1 KR 10-2021-0152555 A CN 113874134 A MX 2021013873 A | | | |
| JP | 54-068765 | A | 02 June 1979 | (Family: none) | | | |
| JP | 2019-025533 | A | 21 February 2019 | US 2020/0238355 A1 paragraphs [0023]-[0029], fig. 1-2 WO 2019/026732 A1 EP 3663012 A1 KR 10-2020-0022004 A CN 110997173 A MX 2020001203 A | | | |
| WO | 2015/098871 | A1 | 02 July 2015 | US 2016/0375477 A1 paragraphs [0196]-[0200], fig. 29 EP 3088093 A1 CA 2932856 A1 CN 105792956 A KR 10-2016-0088363 A MX 2016007459 A RU 2016125126 A BR 112016012725 A2 | | | |
| WO | 2020/144995 | A1 | 16 July 2020 | US 2022/0048088 A1 entire text, all drawings JP 6702521 B1 EP 3909697 A1 KR 10-2021-0092295 A CN 113286672 A MX 2021008365 A | | | |
| JP | 2004-195535 | A | 15 July 2004 | (Family: none) | | | |
| JP | 5664810 | B1 | 04 February 2015 | US 2016/0121384 A1 entire text, all drawings WO 2014/208181 A1 EP 3015185 A1 CN 105358269 A KR 10-2016-0010599 A MX 2015017646 A | | | |
| JP | 2011-206789 | A | 20 October 2011 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004195535 A
- JP 5664810 B
- JP 2011206789 A
- JP 2019025533 A